(19) **Europäisches Patentamt / European Patent Office / Office européen des brevets**

(11) **EP 4 287 320 B1**

(12) # EUROPEAN PATENT SPECIFICATION

(45) Date of publication and mention of the grant of the patent:
**25.02.2026 Bulletin 2026/09**

(21) Application number: **22838036.6**

(22) Date of filing: **08.07.2022**

(51) International Patent Classification (IPC):
*H01M 4/36* (2006.01)    *H01M 4/38* (2006.01)
*H01M 4/40* (2006.01)    *H01M 4/48* (2010.01)
*H01M 10/052* (2010.01)    *H01M 50/40* (2021.01)
*H01M 4/134* (2010.01)    *H01M 4/133* (2010.01)
*H01M 4/02* (2006.01)

(52) Cooperative Patent Classification (CPC):
**H01M 10/0525; H01M 4/366; H01M 4/386; H01M 4/621;** H01M 4/583; H01M 4/625; H01M 2004/027; H01M 2220/30; Y02E 60/10

(86) International application number:
**PCT/KR2022/009909**

(87) International publication number:
**WO 2023/282684 (12.01.2023 Gazette 2023/02)**

(54) **ANODE FOR LITHIUM SECONDARY BATTERY, MANUFACTURING METHOD OF ANODE FOR LITHIUM SECONDARY BATTERY, AND LITHIUM SECONDARY BATTERY COMPRISING ANODE**

ANODE FÜR LITHIUMSEKUNDÄRBATTERIE, HERSTELLUNGSVERFAHREN FÜR DIE ANODE FÜR LITHIUMSEKUNDÄRBATTERIE UND LITHIUMSEKUNDÄRBATTERIE MIT DER ANODE

ANODE POUR BATTERIE SECONDAIRE AU LITHIUM, PROCÉDÉ DE FABRICATION D'ANODE POUR BATTERIE SECONDAIRE AU LITHIUM ET BATTERIE SECONDAIRE AU LITHIUM COMPRENANT UNE ANODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2021 KR 20210090580**
**28.12.2021 KR 20210189600**

(43) Date of publication of application:
**06.12.2023 Bulletin 2023/49**

(73) Proprietor: **LG Energy Solution, Ltd.**
**Seoul 07335 (KR)**

(72) Inventors:
• **JUN, Chan Soo**
  **Daejeon 34122 (KR)**
• **KWON, Yohan**
  **Daejeon 34122 (KR)**
• **KIM, Young Jae**
  **Daejeon 34122 (KR)**
• **KIM, Taegon**
  **Daejeon 34122 (KR)**
• **PARK, Su Jin**
  **Daejeon 34122 (KR)**
• **LEE, Jaewook**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
KR-A- 20130 017 341    KR-A- 20160 073 870
KR-A- 20190 042 299    KR-A- 20200 038 168
KR-A- 20200 071 543    KR-B1- 101 820 445
US-A1- 2018 062 158    US-A1- 2020 335 769

**Description**

[TECHNICAL FIELD]

This application claims priority to and the benefit of Korean Patent Application No. 10-2021-0090580 filed in the Korean Intellectual Property Office on July 9, 2021, and Korean Patent Application No. 10-2021-0189600 filed in the Korean Intellectual Property Office on December 28, 2021.

The present application relates to a negative electrode for a lithium secondary battery, a method for preparing a negative electrode for a lithium secondary battery, and a lithium secondary battery including the negative electrode.

[BACKGROUND ART]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery includes a positive electrode, a negative electrode, an electrolyte, and a separator. The negative electrode includes a negative electrode active material for intercalating and deintercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by together using a silicon-based compound such as Si/C or SiOx, which has a 10-fold higher capacity than a graphite-based material, as a negative electrode active material. However, the silicon-based compound, which is a high-capacity material, is a material having a high capacity compared to graphite used in the related art, and has excellent capacity characteristics, but the volume rapidly expands during the charging process to disconnect the conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that as surface degradation is accelerated, the performance needs to be improved in terms of battery cycle.

Thus, to solve the above problem when the silicon-based compound is used as a negative electrode active material, various measures such as a measure of adjusting the driving potential, additionally a measure of suppressing the volume expansion itself such as a method of further coating an active material layer with a thin film and a method of controlling the particle diameter of the silicon-based compound, or the development of a binder capable of suppressing the volume expansion of the silicon-based compound to prevent the conductive path from being disconnected have been discussed. Furthermore, studies to complement the service life characteristics of the silicon-based negative electrode by limiting the proportion of silicon-based active material used during initial charging and discharging by a pre-lithiation method of a silicon-based active material layer, and imparting a reservoir role have also been conducted.

However, since the above measures may make the performance of the battery rather deteriorate, there is a limitation in application, so that there is still a limitation in commercialization for the preparation of a negative electrode battery with a high content of a silicon-based compound, and as the proportion of silicon-based active material included in the silicon-based active material layer is increased, pre-lithiation is concentrated on the surface of the negative electrode, and consequently, the silicon-based active material on the surface side becomes damaged, and as a heterogeneous pre-lithiation occurs, a problem with the improvement of service life characteristics occurs.

Therefore, there is a need for research on the improvement of the cycle performance along with the capacity characteristics of a lithium secondary battery, which can prevent the electrode surface degradation during the charging and discharging cycle, and by improving uniformity during pre-lithiation, even when a silicon-based compound is used as an active material.

[Related Art Document]

[Patent Document]

Japanese Patent Application Laid-Open No. 2009-080971
US 2018/062158 A1
US 2020/335769 A1

[Detailed Description of the Invention]

[Technical Problem]

The present invention has been made in an effort to provide a negative electrode for a lithium secondary battery, which is capable of preventing the degradation of the electrode surface during the charging and discharging cycle, which is an existing problem while using a silicon-based active material on a negative electrode, and furthermore, is capable of improving the cycle performance along with capacity characteristics of a lithium secondary battery by enhancing the uniformity during pre-lithiation, a method for preparing a negative electrode for a lithium secondary battery, and a lithium secondary battery including the negative electrode.

[Technical Solution]

An exemplary embodiment of the present specification provides a negative electrode for a lithium secondary battery, including: a negative electrode current collector layer; a first negative electrode active material layer on one surface or both surfaces of the negative electrode current collector layer; and a second negative electrode active material layer on a surface opposite to a surface of the first negative electrode active material layer facing the negative electrode current collector layer, in which the first negative electrode active material layer includes a first negative electrode active material layer composition including a first negative electrode active material, the second negative electrode active material layer includes a second negative electrode active material layer composition including a second negative electrode active material; a second negative electrode conductive material; and a second negative electrode binder, the first negative electrode active material includes one or more selected from the group consisting of $SiO_x$ (x=0) and $SiO_x$ (0<x<2), and includes 95 parts by weight or more of the $SiO_x$ (x=0) based on 100 parts by weight of the first negative electrode active material, the second negative electrode conductive material includes one or more selected from the group consisting of a dotted conductive material; a linear conductive material; and a planar conductive material, the second negative electrode active material includes one or more selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

In addition, the first negative electrode active material layer may be in contact with part or an entire surface of the negative electrode current collector layer, and the second negative electrode active material layer may be in contact with part or an entire surface of the first negative electrode active material layer.

Another exemplary embodiment provides a method for preparing a negative electrode for a lithium secondary battery, the method including: providing a negative electrode current collector layer; forming a first negative electrode active material layer by applying a first negative electrode active material layer composition including a first negative electrode active material to one surface or both surfaces of the negative electrode current collector layer; and forming a second negative electrode active material layer by applying a second negative electrode active material layer composition including a second negative electrode active material; a second negative electrode conductive material; and a second negative electrode binder to a surface opposite to a surface of the first negative electrode active material layer facing the negative electrode current collector layer, in which the first negative electrode active material includes one or more selected from the group consisting of $SiO_x$ (x=0) and $SiO_x$ (0<x<2), and includes 95 parts by weight or more of the $SiO_x$ (x=0) based on 100 parts by weight of the first negative electrode active material, the second negative electrode conductive material includes one or more selected from the group consisting of a dotted conductive material; a linear conductive material; and a planar conductive material, the second negative electrode active material includes one or more selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

In addition, the first negative electrode active material layer may be applied to be in contact with part or an entire surface of the negative electrode current collector layer, and the second negative electrode active material layer may be applied to be in contact with part or an entire surface of the first negative electrode active material layer.

Still another exemplary embodiment provides a lithium secondary battery including: a positive electrode; the negative electrode for a lithium secondary battery according to the present application; a separator provided between the positive electrode and the negative electrode; and an electrolyte.

[Advantageous Effects]

The negative electrode for a lithium secondary battery according to an exemplary embodiment of the present invention has a double layer active material layer including a first negative electrode active material layer and a second negative electrode active material layer. In particular, a first negative electrode active material included in the first negative electrode active material layer includes one or more selected from the group consisting of SiOx (x=0) and SiOx (0<x<2), and includes 95 parts by weight or more of the SiOx (x=0) based on 100 parts by weight of the first negative electrode active material, the second negative electrode active material included in the second negative electrode active material layer includes one or more selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

In particular, the second negative electrode active material may include one or more selected from the group consisting of a carbon-based active material, SiOx (0<x<2), SiC and a Si alloy, and may include particularly SiOx (0<x<2).

The negative electrode for a lithium secondary battery according to the present application has a double layer active material layer having the specific composition and content as described above, and may have advantages favorable for high capacity, high density and quick charging as it is particularly because the first negative electrode active material layer includes a high content of SiOx (x=0). Furthermore, by including a silicon-based active material, a carbon-based active material, and the like in the second negative electrode active material layer, it is possible to prevent the electrode surface degradation during the charging and discharging cycle, and it is also possible to enhance the uniformity during pre-lithiation.

Further, the negative electrode is a negative electrode in which the second negative electrode conductive material includes one or more selected from the group consisting of a dotted conductive material; a linear conductive material; and a planar conductive material, and the negative electrode does not significantly affect the service life characteristics of existing lithium secondary batteries because the negative electrode inevitably includes a linear conductive material, and has a feature in which the output characteristics are excellent at a high **C** rate because the number of points capable of charge and discharge is increased.

In particular, the degradation of the negative electrode surface may be reduced during charging and discharging by having the second negative electrode active material layer with the composition as described above. In addition, since the role of a buffer layer may be imparted during a pre-lithiation process which charges a negative electrode for a lithium secondary battery in advance, it is possible to solve a problem when a silicon-based active material layer having a single layer is used, so that the present invention is mainly characterized by having an excellent negative electrode for a lithium secondary battery in terms of service life characteristics in addition to high capacity, high density, and quick charging. By way of illustration, the second negative electrode active material layer of the present invention can serve as a buffer layer. Si electrodes have superior capacity characteristics when compared to SiO electrodes and carbon-based electrodes. However, in Si electrodes, degradation at the surface is concentrated due to the rapid reaction with Li ions during charging/discharging. This also occurs in the pre-lithiation process when Li ions are applied to the negative electrode in advance. A buffer layer is applied in the pre-lithiation process to prevent direct contact between the Si electrode and lithium and to prevent surface degradation. Therefore, it is described as an effect that the second negative electrode active material layer of the present invention can play the same role as the buffer layer during the pre-lithiation process.

After all, the negative electrode for a lithium secondary battery according to the present application is characterized in that the first negative electrode active material layer and the second negative electrode active material layer are included as a double layer to which specific composition and content parts are applied in order to take an advantage of an electrode to which a high content of Si particles as an active material having a single layer are applied and simultaneously solve a surface degradation problem, a problem of uniformity during pre-lithiation and a problem of service life characteristics, which are disadvantages when the electrode has the advantage.

[BRIEF DESCRIPTION OF THE DRAWINGS]

FIG. 1 is a view illustrating the stacking structure of a negative electrode for a lithium secondary battery according to an exemplary embodiment of the present application.

FIG. 2 illustrates a graph of RPT capacity retention rates according to Examples and Comparative Examples of the present application.

FIG. 3 illustrates a graph of RPT resistance increase rates according to Examples and Comparative Examples of the present application.

Fig. 4 is a view illustrating the stacking structure of a negative electrode for a lithium secondary battery according to an exemplary embodiment of the present application.

Fig. 5 is a flow chart illustrating the wet on dry process according to an exemplary embodiment of the present application.

Fig. 6 is a flow chart illustrating the wet on wet process according to an exemplary embodiment of the present application.

Fig. 7 is an SEM image illustrating an interface formed by a wet on dry process on a negative electrode of the present application.

Fig. 8 is an SEM image illustrating an interface formed by a wet on wet process on a negative electrode of the present application.

<Explanation of Reference Numerals and Symbols>

10: the second negative electrode active material layer
20: the first negative electrode active material layer
30: a negative electrode current collector layer

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present application, the BET specific surface area may mean a specific surface area measured by the measurement method.

In the present specification, "Dn" means the particle diameter distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle diameter distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode for a lithium secondary battery, including: a negative electrode current collector layer; a first negative electrode active material layer on at least one surface or both surfaces of the negative electrode current collector layer; and a second negative electrode active material layer on a surface opposite to a surface of the first negative electrode active material layer facing the negative electrode current collector layer, in which the first negative electrode active material layer includes a first negative electrode active material layer composition including a first negative electrode active material, the second negative electrode active material layer includes a second negative electrode active material layer composition including a second negative electrode active material; a second negative electrode conductive material; and a second negative electrode binder, the first negative electrode active material includes one or more selected from the group consisting of SiOx (x=0) and SiOx (0<x<2), and includes 95 parts by weight or more of the SiOx (x=0) based on 100 parts by weight of the first negative electrode active material, the second negative electrode conductive material includes one or more selected from the group consisting of a dotted conductive material; a linear conductive material; and a planar conductive material, the second negative electrode active material includes one or more selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

The negative electrode for a lithium secondary battery according to the present application may be that wherein the first negative electrode active material layer and the second negative electrode active material layer are included as a double layer to which specific composition and content parts are applied in order to take an advantage of an electrode to which a high content of Si particles as an active material having a single layer are applied and simultaneously solve a surface degradation problem, a problem of uniformity during pre-lithiation and a problem of service life characteristics, which are disadvantages when the electrode has the advantage.

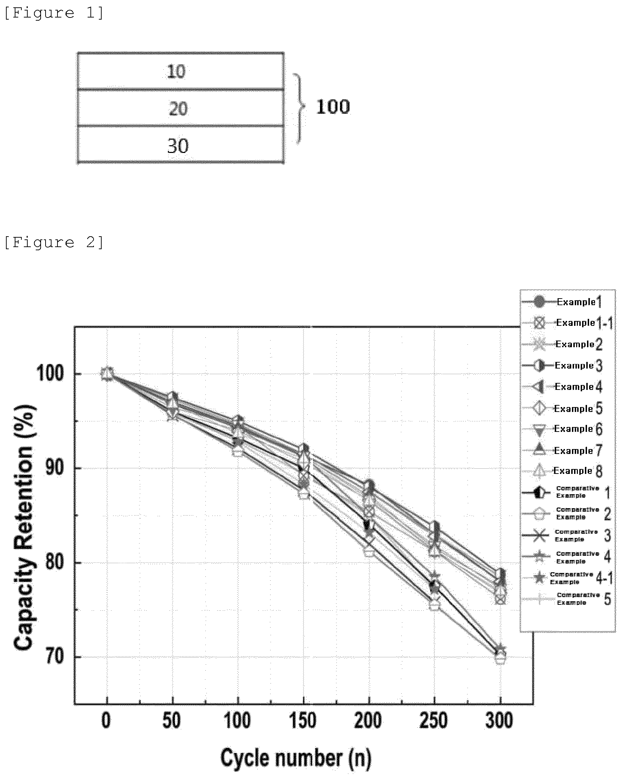

FIG. 1 is a view illustrating the stacking structure of a negative electrode for a lithium secondary battery according to an exemplary embodiment of the present application. Specifically, it is possible to confirm a negative electrode 100 for a lithium secondary battery, including a first negative electrode active material layer 20 and a second negative electrode active material layer 10 on one surface of a negative electrode current collector layer 30, and FIG. 1 illustrates the first negative electrode active material layer on one surface, but the first negative electrode active material layer may be included on both surfaces of the negative electrode current collector layer. As shown, the first negative electrode active material layer may be contact with an entire surface of the negative electrode current collector layer, and the second negative electrode active material layer may be in contact with an entire surface of the first negative electrode active material layer.

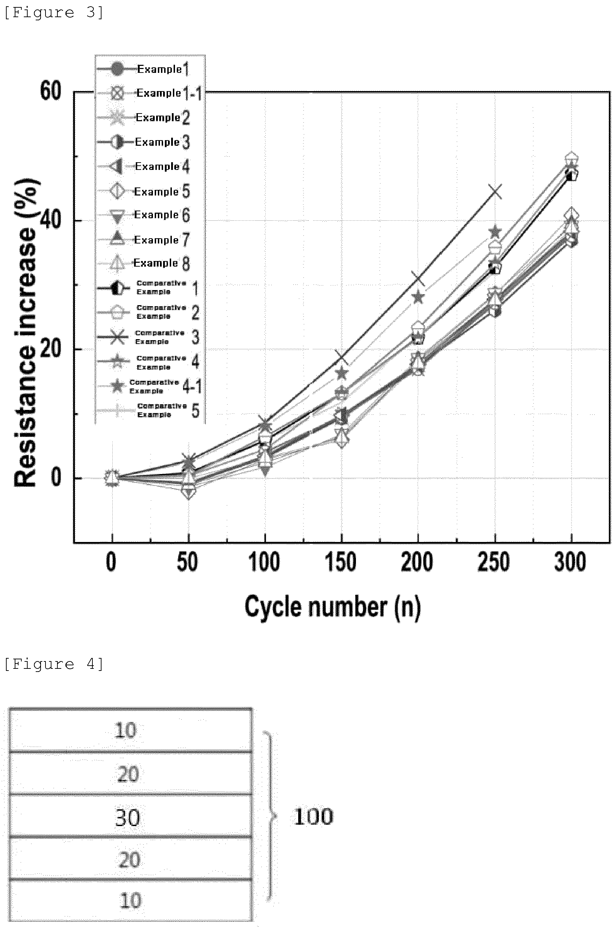

As shown in Fig. 4, a first negative electrode active material layer 20 and a second negative electrode active material layer 10 may be formed on both surfaces of a negative electrode current collector layer 30. As shown in Fig. 4, the arrangement may be 10>20>30>20>10. Additional arrangements may be 10>20>30>20, 10>20>30>10, 10>20>30>10>20. Also, the composition of the active material layer to be coated on both sides may be the same or different from each other. It is preferable that both sides of the negative electrode current collector layer have the same composition, e.g., 10>20>30>20>10.

Hereinafter, the negative electrode for a lithium secondary battery of the present invention will be described in more detail.

In an exemplary embodiment of the present application, provided is a negative electrode for a lithium secondary battery, including: a negative electrode current collector layer; a first negative electrode active material layer on one surface or both surfaces of the negative electrode current collector layer; and a second negative electrode active material layer on a surface opposite to a surface of the first negative electrode active material layer facing the negative electrode current collector layer.

In an exemplary embodiment of the present application, the negative electrode current collector layer generally has a thickness of 1 μm to 100 μm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine convex and concave irregularities on the surface thereof, and the negative electrode current collector layer may be used in various forms such as a film, a sheet, a foil, a net, a porous body, a foam body, and a non-woven fabric body.

In an exemplary embodiment of the present application, the negative electrode current collector layer may have a thickness of 1 μm or more and 100 μm or less.

However, the thickness may be variously modified depending on the type and use of the negative electrode used, and is not limited thereto.

In an exemplary embodiment of the present application, the first negative electrode active material includes one or more selected from the group consisting of SiOx (x=0) and SiOx (0<x<2), and may include 95 parts by weight or more of the SiOx (x=0) based on 100 parts by weight of the first negative electrode active material.

In an exemplary embodiment of the present application, the first negative electrode active material includes one or more selected from the group consisting of SiOx (x=0) and SiOx (0<x<2), and may include 95 parts by weight or more, preferably 97 parts by weight or more, and more preferably 99 parts by weight or more of the SiOx (x=0) based on 100 parts by weight of the first negative electrode active material, and may include 100 parts by weight or less of the SiOx (x=0).

In an exemplary embodiment of the present application, particularly, pure silicon (Si) particles may be used as the first negative electrode active material. The use of pure silicon (Si) as the first negative electrode active material may mean that based on the total 100 parts by weight of the first negative electrode active material as described above, pure Si particles (SiOx (x=0)), which are not bound to other particles or elements, are included in the above range.

The first negative electrode active material used in the first negative electrode active material layer of the present invention may be subjected to a very complicated crystal change in a reaction of electrochemically absorbing, storing and releasing lithium atoms. As the reaction of electrochemically absorbing, storing and releasing lithium atoms progresses, the composition and crystal structure of silicon particles are changed to Si (crystal structure: Fd3m), LiSi (crystal structure: I41/a), $Li_2Si$ (crystal structure: C2/m), Li7Si2 (Pbam), Li22Si$_5$ (F23), and the like. In addition, the volume of silicon particles expands about 4-fold depending on complex changes in crystal structure. Therefore, when the charging and discharging cycle is repeated, silicon particles are destroyed, and as the bond between lithium atom and silicon particle is formed, the insertion site of the lithium atom, which the silicon particle initially had, is damaged, and as a result, the cycle life may remarkably deteriorate.

In an exemplary embodiment of the present application, the first negative electrode active material may be made up of SiOx (x=0).

The first negative electrode active material layer according to the present application may include the first negative electrode active material, and specifically may include pure silicon particles including 95 parts by weight or more of SiOx (x=0). In this case, when pure silicon particles are included in a high content, the capacity characteristics are excellent, and in order to solve the service life deterioration characteristics caused by the resulting surface heterogeneous reaction, the above problem was solved by including the second negative electrode active material layer according to the present invention.

Meanwhile, the first negative electrode active material of the present invention may have an average particle diameter (D50) of 3 μm to 10 μm, specifically 4 μm to 8 μm, and more specifically 5 μm to 7 μm. When the average particle diameter is included in the above range of 3 μm to 10 μm, the viscosity of a negative electrode slurry is formed in a suitable range because the specific surface area of the particle is included in a suitable range. Accordingly, the dispersion of the particles constituting the negative electrode slurry is facilitated. Furthermore, the size of the first negative electrode active material has a value equal to or more than the above lower limit value range, and since a composite including a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfied the above range, excessively large silicon particles are eliminated to form a smooth surface of the negative electrode, and accordingly, it is possible to prevent the heterogeneous phenomenon of the current density during charging and discharging.

In an exemplary embodiment of the present application, the first negative electrode active material generally has a characteristic BET specific surface area. The BET specific surface area of the first negative electrode active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured by DIN 66131 (using nitrogen).

In an exemplary embodiment of the present application, the first negative electrode active material may be present, for example, in a crystalline or amorphous form, and preferably is not porous. The silicon particles are preferably spherical or fragment-shaped particles. Alternatively, but less preferably, the silicon particles may also have a fibrous structure or be present in the form of a film or coating including silicon.

In an exemplary embodiment of the present application, the first negative electrode active material may have a non-circular form, and the circularity thereof is, for example, 0.9 or less, for example, 0.7 to 0.9, for example, 0.8 to 0.9, and for example, 0.85 to 0.9.

In the present application, the circularity is determined by the following Equation 1, where A is the area and P is the boundary line.

[Equation 1]

$$4\pi A/P^2$$

An exemplary embodiment of the present application provides a negative electrode for a lithium secondary battery, in which the first negative electrode active material is present in an amount of 60 parts by weight or more based on 100 parts by weight of the first negative electrode active material layer composition.

In another exemplary embodiment, the first negative electrode active material may be present in an amount of 60 parts by weight or more, preferably 65 parts by weight or more, and more preferably 70 parts by weight or more, and 95 parts by weight or less, preferably 90 parts by weight or less, and more preferably 80 parts by weight or less, based on 100 parts by weight of the first negative electrode active material layer composition.

The first negative electrode active material layer composition according to the present application may solve one or more of a surface degradation problem in charging and discharging, a problem of uniformity during pre-lithiation, and a problem of service life characteristics without making the capacity performance of the entire negative electrode deteriorate by together using a second negative electrode active material layer to be described below even though a first negative electrode active material having a remarkably high capacity is used in the above range.

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, there is a limitation that the volume rapidly expands in the process of charging/discharging to impair the conductive path formed in the negative electrode active material layer, consequently resulting in deterioration in the performance of the battery.

Therefore, in an exemplary embodiment of the present application, the first negative electrode active material layer composition may further include one or more selected from the group consisting of a first negative electrode conductive material; and a first negative electrode binder.

In this case, as the first negative electrode conductive material and first negative electrode binder included in the first negative electrode active material layer composition, those used in the art may be used without limitation.

In an exemplary embodiment of the present application, as the first negative electrode conductive material, a material that may be generally used in the art may be used without limitation, and specifically, it is possible to include one or more selected from the group consisting of a dotted conductive material; a planar conductive material; and a linear conductive material.

The content of the first negative electrode conductive material is the same as the content of the second negative electrode conductive material to be described below, and thus will be described below.

In an exemplary embodiment of the present application, the first negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The first negative electrode binder according to an exemplary embodiment of the present application plays a role of supporting the active material and the conductive material in order to prevent the distortion and structural deformation of the negative electrode structure in the volume expansion and relaxation of the first negative electrode active material, and when the above role is satisfied, all general binders can be applied, specifically, a water-based binder can be used, and more specifically, a PAM-based binder can be used.

In an exemplary embodiment of the present application, the first negative electrode binder may be present in an amount of 30 parts by weight or less, preferably 25 parts by weight or less, more preferably 20 parts by weight or less, and 5 parts by weight or more and 10 parts by weight or more, based on 100 parts by weight of the first negative electrode active material layer composition.

In an exemplary embodiment of the present application, the second negative electrode active material may include one or more selected from the group consisting of a carbon-based active material, a silicon-based active material, a metal-based active material capable of forming an alloy with lithium and a lithium-based nitride.

In this case, the silicon-based active material may be present in an amount of 50 parts by weight or more and 100 parts by weight or less, preferably 60 parts by weight or more and 100 parts by weight or less, and more preferably 65 parts by weight or more and 100 parts by weight or less, based on 100 parts by weight of the second negative electrode active material.

In the second negative electrode active material layer, when the part by weight of the silicon-based active material is less than the above range of 50 parts by weight or more and 100 parts by weight or less, the second negative electrode active material layer instead acts as a resistance layer during the charging and discharging cycle, leading to a decrease in capacity retention rate, and accordingly, there occurs a problem in that the resistance increase rate of the negative electrode is increased.

In an exemplary embodiment of the present application, the silicon-based active material included in the second negative electrode active material may include one or more selected from the group consisting of $SiO_x$ ($0<x<2$), SiC, and a Si alloy.

In an exemplary embodiment of the present application, the silicon-based active material provides a negative electrode for a lithium secondary battery, including SiOx (0<x<2); or SiC.

In still another exemplary embodiment, the silicon-based active material included in the second negative electrode active material may include SiOx (0<x<2).

In yet another exemplary embodiment, the silicon-based active material included in the second negative electrode active material may include SiC.

The negative electrode for a lithium secondary battery according to the present application may be made up of a double layer, and includes the second negative electrode active material in the second negative electrode active material layer as described above, and by including the above-described first negative electrode active material, a surface degradation problem during charging and discharging, a problem of uniformity during pre-lithiation, and a problem of service life characteristics were solved while simultaneously maintaining the high capacity and high density characteristics.

In an exemplary embodiment of the present application, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a form of a spherical or dot shape and used.

In an exemplary embodiment of the present application, provided is a negative electrode for a lithium secondary battery, in which the carbon-based active material includes graphite, the graphite includes artificial graphite and natural graphite, and the weight ratio of the artificial graphite and the natural graphite is 5:5 to 9.5:0.5.

The artificial graphite according to an exemplary embodiment of the present invention may be in the form of primary particles, or may be in the form of secondary particles in which the plurality of primary particles are aggregated.

As used in the present invention, the term "primary particle" means an original particle when a different type of particle is formed from one particle, and a plurality of primary particles may be aggregated, bonded or assembled to form a secondary particle.

As used in the present invention, the term "secondary particles" means large physically distinguishable particles formed by aggregating, bonding or assembling individual primary particles.

The artificial graphite of the primary particles may be prepared by heat-treating one or more selected from the group consisting of needle cokes, mosaic cokes and coal tar pitch.

The artificial graphite is generally prepared by carbonizing raw materials such as coal tar, coal tar pitch and petroleum-based heavy oil to 2,500°C or higher, and after such graphitization, particles subjected to adjustment such as pulverization and formation of secondary particles may also be used as a negative electrode active material. In the case of artificial graphite, the crystals are randomly distributed in the particles, the circularity is lower than that of natural graphite, and the shape is slightly sharp.

Examples of the artificial graphite used in an exemplary embodiment of the present invention include mesophase carbon microbeads (MCMB) and mesophase pitch-based carbon fiber (MPCF), which are commercially widely used, artificial graphite graphitized in block form, graphitized in powder form, and the like. The artificial graphite may have a circularity of 0.91 or less, or 0.6 to 0.91, or 0.7 to 0.9.

Further, the artificial graphite may have a particle diameter of 5 to 30 $\mu$m, preferably 10 to 25 $\mu$m.

Specifically, the artificial graphite primary particles may have a D50 of 6 $\mu$m to 15 $\mu$m, or 6 $\mu$m to 10 $\mu$m, or 6 $\mu$m to 9 $\mu$m. When the D50 of the primary particles satisfies such a range of 6 $\mu$m to 15 $\mu$m, the primary particles may be formed so as to have high graphitization, the orientation index of the negative electrode active material particles is appropriately secured, so that the quick charging performance may be improved.

The artificial graphite secondary particles may be formed by assembling primary particles. That is, the secondary particles may be a structure formed by aggregating the primary particles with each other through an assembly process. The secondary particles may include a carbonaceous matrix that aggregates the primary particles. The carbonaceous matrix may include at least one of soft carbon and graphite. The soft carbon may be formed by heat-treating pitch.

The carbonaceous matrix may be included in an amount of 8 wt% to 16 wt%, specifically 9 wt% to 12 wt% in the secondary particles. The above range is at a level lower than the content of a carbonaceous matrix used in typical artificial graphite secondary particles. In this range, the particle size of the primary particles in the secondary particles is controlled, so that structurally stable secondary particles may be prepared even with a small amount of carbonaceous matrix required for assembly, and the amount of primary particles constituting secondary particles may also be uniform.

The surface of the artificial graphite secondary particles includes a carbon coating layer, and the carbon coating layer may include at least one of amorphous carbon and crystalline carbon.

The crystalline carbon may further improve the conductivity of the negative electrode active material. The crystalline carbon may include at least one selected from the group consisting of fullerene and graphene.

The amorphous carbon may suppress the expansion of the natural graphite by appropriately maintaining the strength of the coating layer. The amorphous carbon may be a carbon-based material formed of a carbide of at least one material selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The artificial graphite secondary particles may have a D50 of 10 $\mu$m to 25 $\mu$m, specifically 12 $\mu$m to 22 $\mu$m, and more specifically 13 $\mu$m to 20 $\mu$m. When the above range of 10 $\mu$m to 25 $\mu$m is satisfied, the artificial graphite secondary particles may be uniformly dispersed in the slurry, and the charging performance of a battery may also be improved.

The artificial graphite secondary particles may have a tap density of 0.85 g/cc to 1.30 g/cc, specifically 0.90 g/cc to 1.10 g/cc, and more specifically 0.90 g/cc to 1.07 g/cc. When the above range of 0.85 g/cc to 1.30 g/cc is satisfied, packing of artificial graphite secondary particles may be smoothly performed in the negative electrode, which means that the negative electrode adhesion may be improved.

The natural graphite may be generally in the form of plate-like aggregates before being processed, and the plate-like particles may be prepared in the form of a sphere having a smooth surface through a post-treatment processing such as particle pulverization and re-assembly process for use as an active material for the preparation of an electrode.

The natural graphite used in an exemplary embodiment of the present invention may have a circularity of more than 0.91 and 0.97 or less, or 0.93 to 0.97, or 0.94 to 0.96.

The natural graphite may have a particle diameter of 5 to 30 $\mu$m, or 10 to 25 $\mu$m.

According to an exemplary embodiment of the present invention, the weight ratio of the artificial graphite and the natural graphite may be 5:5 to 9.5:0.5, or 5:5 to 9.3:0.7, or 5:5 to 9:1, or 6:4 to 9:1. When the weight ratio of the artificial graphite and the natural graphite satisfies such a range, better output may be exhibited, which may be advantageous in terms of service life and quick charging performance.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, the BET specific surface area of artificial graphite or natural graphite, which is a carbon-based active material may satisfy a range of 0.1 m$^2$/g or more and 4.5 m$^2$/g or less. In addition, plate-like graphite, which is a planar conductive material, is in a planar form, and may have a BET specific surface area of 5 m$^2$/g or more.

A representative example of the metal-based active material may be a compound containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal compounds may be used in any form such as an elementary substance , an alloy, an oxide (TiO$_2$, SnO$_2$ and the like), a nitride, a sulfide, a boride, and an alloy with lithium, but the elementary substance, the alloy, the oxide, and the alloy with lithium may be increased in capacity.

In an exemplary embodiment of the present application, the second negative electrode active material includes one or more and two or less selected from the group consisting of a carbon-based active material, a silicon-based active material, a metal-based active material capable of forming an alloy with lithium and a lithium-based nitride, and the silicon-based active material may be present in an amount of 50 parts by weight or more and 100 parts by weight or less, 60 parts by weight or more and 100 parts by weight or less, and 65 parts by weight or more and 100 parts by weight or less, based on 100 parts by weight of the second negative electrode active material.

In an exemplary embodiment of the present application, provided is a negative electrode for a lithium secondary battery, in which the second negative electrode active material includes two or more selected from the group consisting of a carbon-based active material, a silicon-based active material, a metal-based active material capable of forming an alloy with lithium and a lithium-based nitride, and the silicon-based active material is present in an amount of 50 parts by weight or more and 95 parts by weight or less based on 100 parts by weight of the second negative electrode active material.

In another exemplary embodiment, the second negative electrode active material includes two or more selected from the group consisting of a carbon-based active material, a silicon-based active material, a metal-based active material capable of forming an alloy with lithium and a lithium-based nitride, and the silicon-based active material may be included in an amount of 50 parts by weight or more and 95 parts by weight or less, preferably 60 parts by weight or more and 90 parts by weight or less, and more preferably 65 parts by weight or more and 80 parts by weight or less, based on 100 parts by weight of the second negative electrode active material.

In an exemplary embodiment of the present application, for the negative electrode for a lithium secondary battery, a second negative electrode active material includes a silicon-based active material, and the silicon-based active material may be present in an amount of 50 parts by weight or more and 100 parts by weight or less, preferably 60 parts by weight or more and 100 parts by weight or less, and more preferably 70 parts by weight or more and 100 parts by weight or less, based on 100 parts by weight of the second negative electrode active material layer composition.

In an exemplary embodiment of the present application, the negative electrode for a lithium secondary battery includes a silicon-based active material and a carbon-based active material as a second negative electrode active material, and the silicon-based active material may be present in an amount of 40 parts by weight or more and 95 parts by weight or less, preferably 45 parts by weight or more and 80 parts by weight or less, and more preferably 50 parts by weight or more and 75 parts by weight or less, based on 100 parts by weight of the second negative electrode active material layer composition.

When the second negative electrode active material satisfies the above composition and content as described above, a lithium secondary battery having further enhanced various performances such as cycle service life characteristics can be prepared. That is, in the present application, the second negative electrode active material layer serves as a buffer layer, and may suppress a violent reaction with lithium ions on the surface of the second negative electrode active material layer by including the above-described $SiO_x$ ($0<x<2$) and/or carbon-based active material in order to solve a surface degradation problem during charging and discharging, a problem of uniformity during pre-lithiation and a problem of service life characteristics.

After all, the second negative electrode active material layer according to the present application has the above composition and content, and thus may solve the problem of surface degradation during the duration of the charging and discharging cycle, and may have the effect of pre-lithiation even though pre-lithiation is not achieved to the first negative electrode active material layer during pre-lithiation, and simultaneously has a feature capable of providing a negative electrode for a high-capacity and high-density lithium secondary battery.

In an exemplary embodiment of the present application, provided is a negative electrode for a lithium secondary battery, in which the second negative electrode active material is present in an amount of 60 parts by weight or more based on 100 parts by weight of the second negative electrode active material layer composition.

In another exemplary embodiment, the second negative electrode active material may be present in an amount of 60 parts by weight or more, preferably 63 parts by weight or more, and 95 parts by weight or less, preferably 90 parts by weight or less, and more preferably 70 parts by weight or less, based on 100 parts by weight of the second negative electrode active material layer composition.

The second negative electrode active material layer composition according to the present application has a feature of enhancing service life characteristics without making the capacity performance of the negative electrode deteriorate by using a second negative electrode active material which has lower capacity characteristics, but has less particle cracking during the charging and discharging cycle or during pre-lithiation than the first negative electrode active material in the above range.

In an exemplary embodiment of the present application, provided is a negative electrode for a lithium secondary battery in which the second negative electrode active material layer includes: a second negative electrode active material; a second negative electrode conductive material; and a second negative electrode binder.

In this case, the second negative electrode conductive material may include one or more selected from the group consisting of: a dotted conductive material; a linear conductive material; and a planar conductive material.

In an exemplary embodiment of the present application, the dotted conductive material may be used to enhance the conductivity of the negative electrode, and means a conductive material having conductivity without inducing a chemical change and having a dot shape or spherical shape. The dotted conductive material is selected from the group consisting of carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the second negative electrode conductive material may include a planar conductive material.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 $\mu$m to 7 $\mu$m, specifically 3 $\mu$m to 6 $\mu$m, and more specifically 4 $\mu$m to 5 $\mu$m. When the average particle diameter satisfied the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, the planar conductive material provides a negative electrode composition having a D10 of 0.5 $\mu$m or more and 1.5 $\mu$m or less, a D50 of 2.5 $\mu$m or more and 3.5 $\mu$m or less, and a D90 of 7.0 $\mu$m or more and 15.0 $\mu$m or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 5 $m^2$/g or more.

In another exemplary embodiment, the planar conductive material may have a BET specific surface area of 5 $m^2$/g or more and 500 $m^2$/g or less, preferably 5 $m^2$/g or more and 300 $m^2$/g or less, and more preferably 5 $m^2$/g or more and 250 $m^2$/g or less.

In still another exemplary embodiment, the planar conductive material is a high specific surface area planar conductive material, and the BET specific surface area may satisfy a range of 50 $m^2$/g or more and 500 $m^2$/g or less, preferably 80 $m^2$/g or more and 300 $m^2$/g or less, and more preferably 100 $m^2$/g or more and 300 $m^2$/g or less.

In yet another exemplary embodiment, the planar conductive material is a low specific surface area planar conductive material, and the BET specific surface area may satisfy a range of 5 $m^2$/g or more and 40 $m^2$/g or less, preferably 5 $m^2$/g or more and 30 $m^2$/g or less, and more preferably 5 $m^2$/g or more and 25 $m^2$/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in substantially the same orientation as a longitudinal axis of the carbon nanotube unit. In the carbon nanotube unit, a graphite sheet has a cylindrical shape with a nano-sized diameter and has a sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In particular, the linear conductive material according to an exemplary embodiment of the present application may be a single-walled carbon nanotube (SWCNT).

The single-walled carbon nanotube is a material in which carbon atoms arranged in a hexagonal shape form a tube form, exhibits non-conductor, conductor or semiconductor properties depending on the unique chirality thereof, and has a tensile strength about 100-fold higher than that of steel, has excellent flexibility, elasticity and the like, and also has chemically stable properties because carbon atoms are linked by strong covalent bonds. The single-walled carbon nanotubes have an average diameter of 0.5 nm to 15 nm. According to an exemplary embodiment of the present invention, the single-walled carbon nanotubes may have an average diameter of 1 to 10 nm, or 1 nm to 5 nm, or 1 nm to 2 nm. When the average diameter of the single-walled carbon nanotubes satisfies such a range, the electrical conductivity of the negative electrode may be maintained even though the single-walled carbon nanotubes are included in a very small content, and preferred viscosity and solid content can be derived during the preparation of a conductive material dispersion. In the conductive material dispersion, single-walled carbon nanotubes are aggregated with each other, and thus may be present in an entangled state (aggregate). Thus, after the diameter of any entangled single-walled carbon nanotube agglomerates extracted from the conductive material dispersion is confirmed by SEM or TEM, the average diameter may be derived by dividing the diameter of the aggregates by the number of single-walled carbon nanotubes constituting the aggregate.

The single-walled carbon nanotubes may have a BET specific surface area of 500 $m^2$/g to 1,500 $m^2$/g, or 900 $m^2$/g to 1,200 $m^2$/g, and specifically 250 $m^2$/g to 330 $m^2$/g. When the above range is satisfied, a conductive material dispersion having a preferred solid content is derived, and the viscosity of the negative electrode slurry is prevented from being excessively increased. The BET specific surface area may be measured by a nitrogen adsorption BET method.

The single-walled carbon nanotubes may have an aspect ratio of 50 to 20,000, or may have a length of 5 to 100 $\mu$m, or 5 to 50 $\mu$m. When the aspect ratio or length satisfies such a range, the specific surface area is at a high level, so that the single-walled carbon nanotubes in the negative electrode may be adsorbed to the active material particles by a strong attractive force. Accordingly, the conductive network may be smoothly maintained even in the volume expansion of the negative electrode active material. The aspect ratio may be confirmed by obtaining the average of aspect ratios of 15 single-walled carbon nanotubes with a high aspect ratio and 15 single-walled carbon nanotubes with a low aspect ratio when the single-walled carbon nanotube powder is observed through SEM.

Since the single-walled carbon nanotubes have a higher aspect ratio than those of multi-walled carbon nanotubes and double-walled carbon nanotubes, the single-walled carbon nanotubes have a long length and a large volume, and thus are advantageous in that an electrical network can be constructed even though only a small amount is used.

In an exemplary embodiment of the present application, the second negative electrode conductive material be present in an amount of 1 part by weight or more and 40 parts by weight or less based on 100 parts by weight of the second negative electrode active material layer composition.

In another exemplary embodiment, the second negative electrode conductive material may be present in an amount of 1 part by weight or more and 40 parts by weight or less, preferably 10 parts by weight or more and 30 parts by weight or less, and more preferably 15 parts by weight or more and 25 parts by weight or less, based on 100 parts by weight of the second negative electrode active material layer composition.

In an exemplary embodiment of the present application, the second negative electrode conductive material includes: a dotted conductive material; a planar conductive material; and a linear conductive material, and the dotted conductive material: planar conductive material: linear conductive material may satisfy a ratio of 1:1:0.01 to 1:1:1.

In an exemplary embodiment of the present application, the dotted conductive material may satisfy a range of 1 part by weight or more and 60 parts by weight or less, preferably 5 parts by weight or more and 50 parts by weight or less, and more preferably 10 parts by weight or more and 50 parts by weight or less, based on 100 parts by weight of the second negative electrode conductive material.

In an exemplary embodiment of the present application, the planar conductive material may satisfy a range of 1 part by weight or more and 60 parts by weight or less, preferably 5 parts by weight or more and 50 parts by weight or less, and more preferably 10 parts by weight or more and 50 parts by weight or less, based on 100 parts by weight of the second negative electrode conductive material.

In an exemplary embodiment of the present application, the linear conductive material may satisfy a range of 0.01 part by weight or more and 10 parts by weight or less, preferably 0.05 part by weight or more and 8 parts by weight or less, and more preferably 0.1 part by weight or more and 5 parts by weight or less, based on 100 parts by weight of the second negative electrode conductive material.

In an exemplary embodiment of the present application, the second negative electrode conductive material may include: a linear conductive material; and a planar conductive material.

In an exemplary embodiment of the present application, the second negative electrode conductive material includes a linear conductive material and a planar conductive material, and the ratio of linear conductive material : planar conductive material may satisfy 0.01:1 to 0.1:1.

In an exemplary embodiment of the present application, as the second negative electrode conductive material particularly includes a linear conductive material and a planar conductive material and each satisfies the composition and ratio, the second negative electrode conductive material has a feature in which output characteristics at high C-rate are excellent because the service life characteristics of the existing lithium secondary battery are not greatly affected and points where the battery can be charged and discharged are increased.

Provided is a negative electrode for a lithium secondary battery, in which the first negative electrode conductive material according to the present application at least includes a linear conductive material.

Provided is a negative electrode for a lithium secondary battery, in which the second negative electrode conductive material according to the present application at least includes a linear conductive material.

In an exemplary embodiment of the present application, the second negative electrode conductive material may be composed of a linear conductive material.

In this case, the content of the linear conductive material may be 0.1 to 2 parts by weight, or 0.1 to 0.7 parts by weight or 0.1 to 0.3 parts by weight, based on 100 parts by weight of the second negative electrode active material. When the content of the linear conductive material satisfies such a range, an electric network may be sufficiently constructed in the negative electrode active material layer, which is advantageous in terms of mixing and coating processability during the preparation of an electrode. Further, in the negative electrode according to an exemplary embodiment of the present invention, since a linear conductive material is included in both the first negative electrode active material layer and the second negative electrode active material layer, a conductive network between the active materials according to the volume expansion and contraction of a Si electrode may be maintained, which is advantageous in terms of service life, and the quick charging performance can be maintained. Basically, quick charging performance is advantageous because a Si-containing negative electrode can be coated with a thin film compared to graphite, but the linear conductive material also helps quick charging by maintaining a strong conductive network, and furthermore, the linear conductive material may be further helpful for ameliorating an initial sudden drop in the service life of the Si-containing negative electrode and maintaining the service life thereof.

The second negative electrode conductive material according to the present application has a completely different configuration from a positive electrode conductive material applied to the positive electrode. That is, the second negative electrode conductive material according to the present application serves to support a contact point between silicon-based active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

Further, the second negative electrode conductive material according to the present application is applied to a silicon-based active material, and has a completely different configuration from a conductive material applied to a graphite-containing active material. That is, the conductive material used for the electrode having the graphite-containing active material simply has small particles with respect to the active material, and thus has the characteristics of enhancing the output characteristics and imparting partial conductivity, and the configuration and role thereof are completely different from those of the first negative electrode conductive material applied together with the silicon-based active material as in the present invention.

In this case, the same content as the content of the second negative electrode conductive material described above may be independently applied to the content of the first negative electrode conductive material.

In an exemplary embodiment of the present application, provided is a negative electrode for a lithium secondary battery, in which the first negative electrode active material layer has a thickness of 10 $\mu$m or more and 200 $\mu$m or less, and the second negative electrode active material layer has a thickness of 10 $\mu$m or more and 100 $\mu$m or less. When the first and second negative electrode active material layers are present on both sides of the current collector, each layer has the thickness range as defined above.

In an exemplary embodiment of the present application, provided is a negative electrode for a lithium secondary battery, in which a loading amount (a) of first negative electrode active material layer composition satisfies 2-fold or more of a loading amount (b) of second negative electrode active material layer composition.

In another exemplary embodiment, the loading amount (a) of first negative electrode active material layer composition may satisfy a range of 1.5-fold or more and 10-fold or less, preferably 2.2-fold or more and 6-fold or less of the loading amount (b) of second negative electrode active material layer composition.

The loading amount may mean the weight of a composition for forming a negative electrode active material layer, and specifically, the loading amount of the composition may have the same meaning as a loading amount of a slurry including the composition.

In an exemplary embodiment of the present application, the loading amount (a) of first negative electrode active material layer composition may satisfy a range of 2 mg/cm$^2$ or more and 5 mg/cm$^2$ or less, preferably 2.2 mg/cm$^2$ or more and 4 mg/cm$^2$ or less.

In an exemplary embodiment of the present application, the loading amount (b) of second negative electrode active material layer composition may satisfy a range of 0.5 mg/cm$^2$ or more and 1.5 mg/cm$^2$ or less, preferably 0.8 mg/cm$^2$ or more and 1.3 mg/cm$^2$ or less.

The first negative electrode active material layer composition and the second negative electrode active material layer composition may have the loading amounts, thereby regulating the ratio of active material included in the first negative electrode active material layer and the second negative electrode active material layer. That is, capacity characteristics may be optimized by regulating the amount of first negative electrode active material included in the first negative electrode active material layer, and simultaneously, the amount of second negative electrode active material included in the second negative electrode active material layer may be set and regulated to suppress the surface reaction of the negative electrode without making capacity characteristics deteriorate, thereby having a feature of enhancing service life characteristics.

In an exemplary embodiment of the present application, the negative electrode for a lithium secondary battery may include a double layer, and is characterized in that in particular, the second negative electrode active material layer serves as a buffer layer during pre-lithiation and the first negative electrode active material layer is prevented from being pre-lithiated.

In an exemplary embodiment of the present application, the negative electrode for a lithium secondary battery may be a pre-lithiated negative electrode.

In an exemplary embodiment of the present application, provided is a method for preparing a negative electrode for a lithium secondary battery, the method including: providing a negative electrode current collector layer; forming a first negative electrode active material layer by applying a first negative electrode active material layer composition including a first negative electrode active material to one surface or both surfaces of the negative electrode current collector layer; and forming a second negative electrode active material layer by applying a second negative electrode active material layer composition including a second negative electrode active material; a second negative electrode conductive material; and a second negative electrode binder to a surface opposite to a surface of the first negative electrode active material layer facing the negative electrode current collector layer, in which the first negative electrode active material includes one or more selected from the group consisting of SiOx (x=0) and SiOx (0<x<2), and includes 95 parts by weight or more of the SiOx (x=0) based on 100 parts by weight of the first negative electrode active material, the second negative electrode conductive material includes one or more selected from the group consisting of a dotted conductive material; a linear conductive material; and a planar conductive material, the second negative electrode active material includes one or more selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

In the method for preparing the negative electrode, the above-described contents may be applied to the composition and content included in each step.

In an exemplary embodiment of the present application, provided is forming a first negative electrode active material layer by applying a first negative electrode active material layer composition to one surface or both surfaces of the negative electrode current collector layer.

That is, the step is forming an active material layer on a negative electrode current collector layer, and may mean forming an active material layer on a surface (lower portion) facing a current collector layer in a double layer structure.

In an exemplary embodiment of the present application, the applying of the first negative electrode active material layer composition includes applying a first negative electrode slurry including the first negative electrode active material layer composition; and a negative electrode slurry solvent and drying the applied first negative electrode slurry.

In this case, the solid content of the first negative electrode slurry may satisfy a range of 10% to 40%.

In an exemplary embodiment of the present application, the forming of the first negative electrode active material layer may include: mixing the first negative electrode slurry; and coating one surface or both surfaces of the negative electrode current collector layer with the mixed first negative electrode slurry, and for the coating, a coating method generally used in the art may be used.

In an exemplary embodiment of the present application, provided is forming a second negative electrode active material by applying a second negative electrode active material layer composition to a surface opposite to a surface of the first negative electrode active material layer facing the negative electrode current collector layer.

That is, the step is forming a second negative electrode active material layer on the first negative electrode active material layer, and may mean forming an active material layer on a surface (upper portion) apart from the current collector layer in the double layer structure. If the first negative electrode active material layer is formed on both surfaces of the current collector layer, the second negative electrode active material layer may be applied to one or both of such first negative electrode active material layers.

In an exemplary embodiment of the present application, the applying of the second negative electrode active material layer composition includes applying a second negative electrode slurry including the second negative electrode active material layer composition; and a negative electrode slurry solvent and drying the applied second negative electrode slurry.

In this case, the solid content of the second negative electrode slurry may satisfy a range of 10% to 40%.

In an exemplary embodiment of the present application, provided is a method for preparing a negative electrode for a lithium secondary battery, in which the forming of the second negative electrode active material layer includes: mixing the second negative electrode slurry; and coating a surface opposite to a surface of the first negative electrode active material layer facing the negative electrode current collector layer with the mixed second negative electrode slurry.

For the coating, a coating method generally used in the art may be used.

The description of forming the first negative electrode active material layer may be equally applied to the forming of the second negative electrode active material layer.

In an exemplary embodiment of the present application, provided is a method for preparing a negative electrode for a lithium secondary battery, in which the forming of the second negative electrode active material layer on the first negative electrode active material layer includes a wet on dry process; or a wet on wet process.

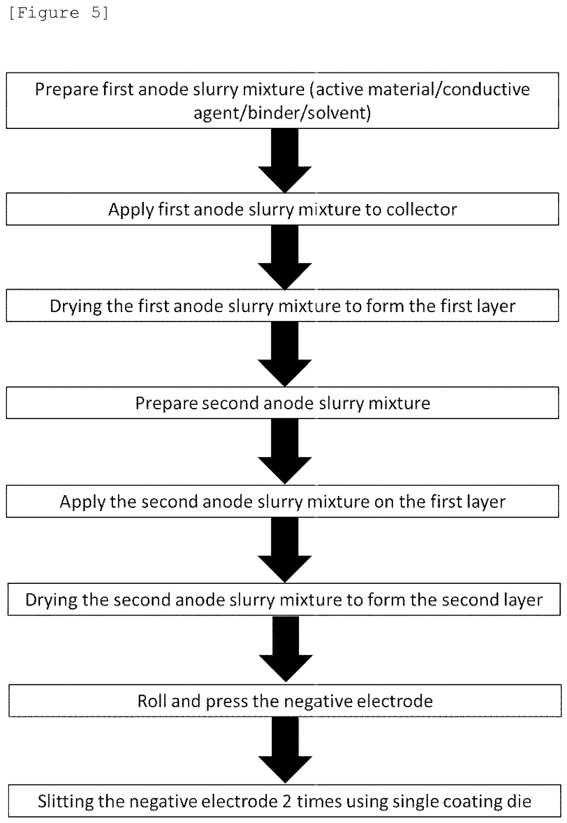

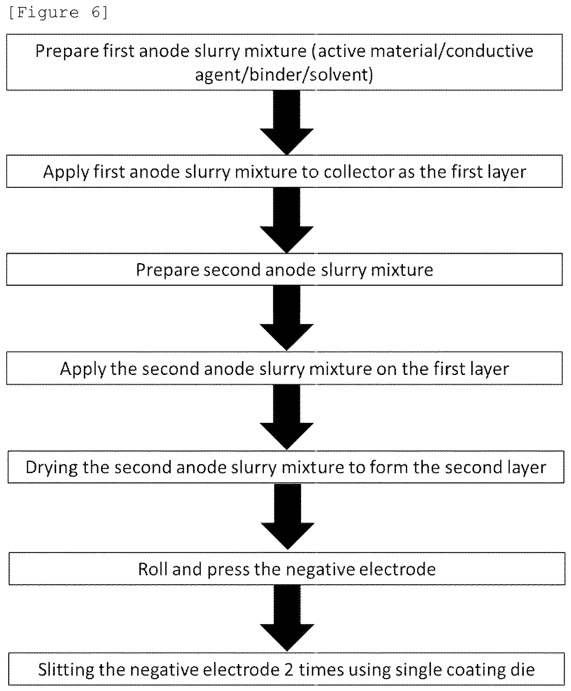

In an exemplary embodiment of the present application, the wet on dry process may mean a process of applying a first negative electrode active material layer composition, then partially or completely drying the applied composition, and applying a second negative electrode active material layer composition to the upper portion thereof. An exemplary wet on dry process is shown in the flowchart of Fig. 5. In the wet on dry process, the first negative electrode slurry mixture is prepared, and then applied onto the collector. The first negative electrode slurry mixture is dried to form the first layer. Then, the second negative electrode slurry mixture is prepared, and then applied on the first layer. The second negative electrode slurry mixture is dried to form the second layer. The layers may be rolled and pressed to form the negative electrode. Then, the negative electrode may be slitted two times using a single coating die. In another exemplary embodiment of the present application, the wet on wet process means a process of applying a first negative electrode active material layer composition, and then applying a second negative electrode active material layer composition to the upper portion thereof without drying the applied first negative electrode active material layer composition. An exemplary wet on wet process is shown in the flowchart of Fig. 6. In the wet on wet process, the first negative electrode slurry mixture is prepared, and then applied onto the collector as the first layer. Then, the second negative electrode slurry mixture is prepared, and then applied on the first layer. The second negative electrode slurry mixture is dried to form the second layer. The layers may be rolled and pressed to form the negative electrode. Then, the negative electrode may be slitted two times using a single coating die.

In particular, the wet on dry process applies a first negative electrode active material layer composition, then partially or completely dries the applied composition, and then applies a second negative electrode active material layer composition to the upper portion thereof, and by the process as described above, the first negative electrode active material layer and the second negative electrode active material layer may have a clear or discrete boundary. Accordingly, it is characterized in that the compositions included in the first negative electrode active material layer and the second negative electrode active material layer are not mixed and may include a double layer.

In an exemplary embodiment of the present application, the negative electrode slurry solvent can be used without limitation as long as the solvent can dissolve a first negative electrode active material layer composition and a second negative electrode active material layer composition, and specifically, water or NMP may be used.

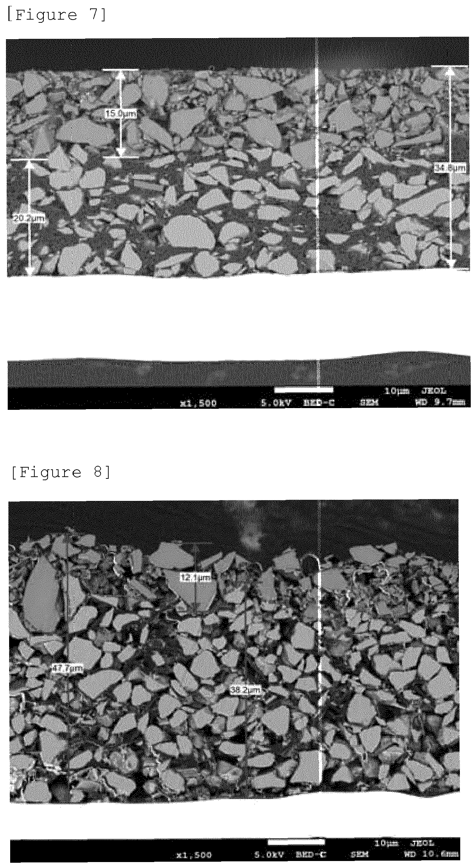

As a result of the wet on wet process, a junction region may be formed. In order for the wet on wet process to occur, the viscosity of the first negative electrode active material layer composition may be lower than that of the second negative electrode active material layer composition such that inter-mixing occurs at the junction region and the process can proceed. As shown in Fig. 7, after the first negative electrode active material layer is dried (i.e., a wet on dry process), the interface is clearly formed by applying the second negative electrode active material layer composition. As shown in Fig. 8, intermixing occurs at the interface to form a junction region by applying the second negative electrode active material layer composition (the first negative electrode active material layer composition and the second negative electrode active material layer composition are applied at the same time) while the first negative electrode active material layer composition is not completely dried.

In an exemplary embodiment of the present application, provided is a method for preparing a negative electrode for a lithium secondary battery, the method including: subjecting a negative electrode in which a first negative electrode active material layer and a second negative electrode active material layer are formed on the negative electrode current collector to pre-lithiation, in which the subjecting of the negative electrode to at least one of four pre-lithiation processes: a lithium electroplating process; a lithium metal transfer process; a lithium metal deposition process; or a stabilized lithium metal powder (SLMP) coating process.

The negative electrode for a lithium secondary battery as described above includes $SiO_x$ (x=0) for enhancing the capacity characteristics as a first negative electrode active material layer, is provided with a specific composition of the above-described silicon-based active material and/or carbon-based active material as a second negative electrode active material layer, and thus may have an advantage of quick charging as it is. Furthermore, since the second negative electrode active material has the above composition and thus is highly irreversible, a particularly advantageous effect may be obtained even in a pre-lithiation process in which the negative electrode is charged in advance. Compared to the case where only the first negative electrode active material layer is simply applied, the second negative electrode active material has the composition as described above, and thus a uniform pre-lithiation process can be performed on the upper portion of the negative electrode, and accordingly, the negative electrode has a feature in which the service life may be further improved.

In an exemplary embodiment of the present application, the porosities of the first and second negative electrode active material layers may satisfy a range of 10% or more and 60% or less.

In another exemplary embodiment, the porosities of the first and second negative electrode active material layers may satisfy a range of 10% or more and 60% or less, preferably 20% or more and 50% or less, and more preferably 30% or more and 45% or less.

The porosity varies depending on the composition and content of the active material; conductive material; and binder included in the first and second negative electrode active material layers, and accordingly, the electric conductivity and resistance in the electrode are characterized by having appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 $\mu$m to 500 $\mu$m, and the adhesion of the positive electrode active material may also be enhanced by forming fine convex and concave irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such a cyclic carbonate may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium- and-large sized device selected from the group consisting of an electric car, a hybrid electric vehicle, a plug-in hybrid electric vehicle, and a power storage system.

[Mode for carrying out the invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Examples>**

**<Preparation of negative electrode>**

Examples 1-4 and 1-1 are not according to the present invention. Examples 5-8 are according to the present invention.

**Example 1: Preparation of negative electrode** Preparation of first negative electrode active material layer

A first negative electrode active material layer composition including Si (average particle diameter (D50): 5 $\mu$m) as a silicon-based active material, a first conductive material, a second conductive material, a third conductive material and polyacrylamide as a binder at a weight ratio of 70:9.8:10:0.2:10 was prepared. A first negative electrode slurry was prepared by adding the first negative electrode active material layer composition to distilled water as a solvent for forming a negative electrode slurry (solid concentration of 25 wt%).

The first conductive material was carbon black C (specific surface area: 58 $m^2/g$, diameter: 37 nm), the second conductive material was plate-like graphite (specific surface area: 17 $m^2/g$, average particle diameter (D50): 3.5 $\mu$m), and the third conductive material was carbon nanotubes.

After the first conductive material, the second conductive material, the third conductive material, the binder and water were dispersed at 2500 rpm for 30 minutes using a homo mixer as a mixing method, the active material was added thereto, and then the resulting mixture was dispersed at 2500 rpm for 30 minutes to prepare a first negative electrode slurry.

Both surfaces of a copper current collector (thickness: 8 $\mu$m) as a negative electrode current collector were coated with the first negative electrode slurry in a loading amount of 2.75 mg/cm$^2$, and the copper current collector was roll-pressed and dried in a vacuum oven at 130°C for 10 hours to form a first negative electrode active material layer (thickness: 33 $\mu$m).

**Preparation of second negative electrode active material layer**

A second negative electrode active material layer composition including SiO (average particle diameter (D50): 3.5 $\mu$m) as a silicon-based active material, a second conductive material, a third conductive material, and polyacrylamide as a binder at a weight ratio of 70:19.8:0.2:10 was prepared. A second negative electrode slurry was prepared by adding the second negative electrode active material layer composition to distilled water as a solvent for forming a negative electrode slurry (solid concentration of 25 wt%).

The second conductive material was plate-like graphite (specific surface area: 17 m$^2$/g, average particle diameter (D50): 3.5 $\mu$m), and the third conductive material was carbon nanotubes.

After the second conductive material, the third conductive material, the binder and water were dispersed at 2500 rpm for 30 minutes using a homo mixer as a mixing method, the active material was added thereto, and then the resulting mixture was dispersed at 2500 rpm for 30 minutes to prepare the second negative electrode slurry.

One surface of first negative electrode active material layer was coated with the second negative electrode slurry in a loading amount of 1 mg/cm$^2$, roll-pressed and dried in a vacuum oven at 130°C for 10 hours to form a second negative electrode active material layer (thickness: 15 $\mu$m).

Thereafter, pre-lithiation was performed by transferring lithium metal to the upper portion of the second negative electrode active material layer. For the pre-lithiation ratio, 10 to 15% pre-lithiation was achieved based on the negative electrode charging capacity.

**Example 1-1: Preparation of negative electrode**

A negative electrode was prepared in the same manner as in Example 1, except that the negative electrode was not subjected to pre-lithiation in Example 1.

**Example 2: Preparation of negative electrode**

A negative electrode was prepared under the same conditions as in Example 1 (solid concentration of 25 wt%), except that in the preparation of the second negative electrode active material layer in Example 1, a second negative electrode active material layer composition including SiC (average particle diameter (D50): 3.5 $\mu$m) as a silicon-based active material, a second conductive material, a third conductive material, and polyacrylamide as a binder at a weight ratio of 70:19.8:0.2:10 was prepared, and added to distilled water as a solvent for forming a negative electrode slurry to prepare a second negative electrode slurry.

**Example 3: Preparation of negative electrode**

A negative electrode was prepared under the same conditions as in Example 1 (solid concentration of 25 wt%), except that in the preparation of the second negative electrode active material layer in Example 1, a second negative electrode active material layer composition including SiO (average particle diameter (D50): 3.5 $\mu$m) as a silicon-based active material, a second conductive material, a third conductive material, and polyacrylamide as a binder at a weight ratio of 63:17:0.3:19.7 was prepared, and added to distilled water as a solvent for forming a negative electrode slurry to prepare a second negative electrode slurry.

**Example 4: Preparation of negative electrode**

**Preparation of first negative electrode active material layer**

A first negative electrode active material layer was prepared in the same manner as in Example 1.

**Preparation of second negative electrode active material layer**

A second negative electrode active material layer composition including SiO (average particle diameter (D50): 3.5 $\mu$m) as a silicon-based active material, artificial graphite, a second conductive material, a third conductive material, and polyacrylamide as a binder at a weight ratio of 50:20:10:10:10 was prepared. A second negative electrode slurry was prepared by adding the second negative electrode active material layer composition to distilled water as a solvent for forming a negative electrode slurry (solid concentration of 25 wt%).

The second conductive material was plate-like graphite (specific surface area: 17 m$^2$/g, average particle diameter (D50): 3.5 $\mu$m), and the third conductive material was carbon nanotubes.

After the second conductive material, the third conductive material, the binder and water were dispersed at 2500 rpm for 30 minutes using a homo mixer as a mixing method, the active material was added thereto, and then the resulting mixture was dispersed at 2500 rpm for 30 minutes to prepare a slurry.

The first negative electrode active material layer was coated with the second negative electrode slurry in a loading amount of 2.8mg/cm$^2$, roll-pressed and dried in a vacuum oven at 130°C for 10 hours to form a second negative electrode active material layer (thickness: 15 $\mu$m).

Thereafter, pre-lithiation was performed by transferring lithium metal to the upper portion of the second negative electrode active material layer.

## Example 5: Preparation of negative electrode

100 parts by weight of Si having a D50 of 5 $\mu$m, 13 parts by weight of carbon black as a first conductive material, 0.3 part by weight of single-walled carbon nanotubes (SWCNTs) having an average diameter of 1 nm, 15 parts by weight of polyacrylic acid (PAA) as a first binder polymer and 1.1 parts by weight of carboxymethyl cellulose (CMC) were mixed and water as a first dispersion medium was added thereto to prepare a first negative electrode slurry. In this case, the solid content of the first negative electrode slurry was 25 wt%.

63 parts by weight of the SiO, 7 parts by weight of natural graphite, 30 parts by weight of artificial graphite of secondary particles having a D50 of 16.7 $\mu$m and a tap density of 0.91 g/cc, 1.0 part by weight of carbon black as a second conductive material, 3.0 parts by weight of styrene butadiene rubber (SBR) as a second binder polymer, and 1.1 parts by weight of carboxymethyl cellulose (CMC) were mixed and water as a second dispersion medium was added thereto to prepare a second negative electrode slurry. In this case, the solid content of the second negative electrode slurry was 49 wt%.

Using a double slot die, the first negative electrode slurry was coated with the second negative electrode slurry while simultaneously coating one surface of a copper (Cu) thin film which is a negative electrode current collector having a thickness of 10 $\mu$m with the first negative electrode slurry. In this case, the loading amounts of the first negative electrode slurry and the second negative electrode slurry were 3 mg/cm$^2$ and 1 mg/cm$^2$, respectively.

Thereafter, the coated first negative electrode slurry and second negative electrode slurry were simultaneously dried using an apparatus in which hot air drying and infrared drying methods were combined to form an active material layer.

The negative electrode active material layer thus formed was simultaneously rolled by a roll pressing method to prepare a negative electrode provided with a double-layered active material layer with a double layer structure having a thickness of 78 $\mu$m.

## Example 6: Preparation of negative electrode

A negative electrode was prepared in the same manner as in Example 5, except that in the second negative electrode slurry of Example 5, the negative electrode active material was changed to "31.5 parts by weight of artificial graphite, 3.5 parts by weight of natural graphite, and 65 parts by weight of SiO".

## Example 7: Preparation of negative electrode

A negative electrode was prepared in the same manner as in Example 5, except that in the second negative electrode slurry of Example 5, the negative electrode active material was changed to "63 parts by weight of SiC, 7 parts by weight of natural graphite, and 30 parts by weight of artificial graphite".

## Example 8: Preparation of negative electrode

A negative electrode was prepared in the same manner as in Example 5, except that in the second negative electrode slurry of Example 5, the negative electrode active material was changed to "31.5 parts by weight of artificial graphite, 3.5 parts by weight of natural graphite, and 65 parts by weight of SiC".

## Method of measuring average diameter of single-walled carbon nanotubes

After single-walled carbon nanotubes were magnified and measured using a transmission electron microscope (TEM) (manufacturer: HITACHI, model name: H7650) at a magnification of 150,000 x or more, the average diameter of single-walled carbon nanotubes confirmed in an arbitrarily sampled range in the measured photographs was measured. In this case, after the single-walled carbon nanotubes were measured by setting the number of measurements to a minimum of 10 or more, an average diameter was obtained.

## Comparative Example 1: Preparation of negative electrode

An active material layer composition including Si (average particle diameter (D50): 5 $\mu$m) as a silicon-based active material, a first conductive material, and polyacrylamide as a binder at a weight ratio of 70:20:10 was prepared. A negative electrode slurry was prepared by adding the active material layer composition to distilled water as a solvent for forming a negative electrode slurry (solid concentration of 25 wt%).

As the first conductive material, carbon black C (specific surface area: 58 m$^2$/g, diameter: 37 nm) was used.

After the first conductive material, the binder and water were dispersed at 2500 rpm for 30 minutes using a homo mixer as a mixing method, the active material was added thereto, and then the resulting mixture was dispersed at 2500 rpm for 30 minutes to prepare a slurry.

Both surfaces of a copper current collector (thickness: 8 $\mu$m) as a negative electrode current collector were coated with the negative electrode slurry in a loading amount of 85 mg/25 cm$^2$, and the copper current collector was roll-pressed and dried in a vacuum oven at 130°C for 10 hours to form a negative electrode active material layer (thickness: 33 $\mu$m).

Thereafter, pre-lithiation was performed by transferring lithium metal to the upper portion of the negative electrode active material layer.

## Comparative Example 2: Preparation of negative electrode

A negative electrode was prepared in the same manner as in Comparative Example 1, except that pre-lithiation was not performed in Comparative Example 1.

## Comparative Example 3: Preparation of negative electrode

A negative electrode was prepared in the same manner as in Example 1, except that the stacking order of the first negative electrode active material layer and the second negative electrode active material layer was changed in Example 1 such that both sides of the current collector were coated with the second negative electrode slurry, and thereafter the surface of the second negative electrode layer was coated with the first negative electrode slurry.

## Comparative Example 4: Preparation of negative electrode

A negative electrode was prepared in the same manner as in Example 1, except that a second negative electrode slurry was prepared by adding SiO (average particle diameter (D50): 3.5 $\mu$m) as a silicon-based active material, artificial graphite as a carbon-based active material, a first conductive material, a second conductive material, and polyacrylamide as a binder at a weight ratio of 30:50:5:5:10 to distilled water as a solvent for forming a negative electrode slurry in Example 1.

## Comparative Example 4-1: Preparation of negative electrode

A negative electrode was prepared in the same manner as in Comparative Example 4, except that pre-lithiation was not performed in Comparative Example 4.

## Comparative Example 5: Preparation of negative electrode

A negative electrode was prepared in the same manner as in Comparative Example 1, except that an active material layer composition including Si (average particle diameter (D50): 5 $\mu$m) and SiO (average particle diameter (D50): 3.5 $\mu$m) as active material layer compositions, a first conductive material, a second conductive material, a third conductive material, and polyacrylamide as a binder at a weight ratio of 52.5:17.5:9.8:10:0.2:10 was prepared in Comparative Example 1.

The first conductive material was carbon black C (specific surface area: 58 m$^2$/g, diameter: 37 nm), the second conductive material was plate-like graphite (specific surface area: 17 m$^2$/g, average particle diameter (D50): 3.5 $\mu$m), and the third conductive material was carbon nanotubes.

**<Preparation of secondary battery>**

A positive electrode slurry was prepared by adding $LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 $\mu$m) as a positive electrode current collector were coated with the positive electrode slurry in a loading amount of 537 mg/25 cm$^2$, and the aluminum current collector was roll-pressed and dried in a vacuum oven at 130°C for 10 hours to form a positive electrode active material layer (thickness: 65 $\mu$m), thereby preparing a positive electrode (thickness of the positive electrode: 77 $\mu$m, porosity of 26%).

The secondary battery of Example 1 was prepared by interposing a polyethylene separator between the positive electrode and the negative electrode of Example 1 and injecting an electrolyte thereinto.

The electrolyte was obtained by adding 3 wt% of vinylene carbonate based on the total weight of the electrolyte to an organic solvent in which fluoroethylene carbonate (FEC) and diethyl carbonate (DEC) were mixed at a volume ratio of 30:70 and adding $LiPF_6$ as a lithium salt at a concentration of 1 M thereto.

Secondary batteries were manufactured in the same manner as in those described above, respectively, except that the negative electrodes in the Examples and the Comparative Examples were used.

## Experimental Example 1: Evaluation of service life characteristics

The service lives and capacity retention rates of the secondary batteries including the negative electrodes prepared in Examples 1 to 4 and 1-1 (which are not according to the present invention) and Comparative Examples 4-1 and 1 to 5 were evaluated using an electrochemical charging and discharging device. The secondary batteries were subjected to cycle test at 4.2-3.0V 1C/0.5C, and the capacity retention rates were measured by charging/discharging the secondary batteries at 0.33C/0.33C (4.2-3.0V) every 50 cycles during the test. Capacity retention rate (%) = {(Discharge capacity in the Nth cycle)/(Discharge capacity in the 1st cycle)} X 100 FIG. 2 illustrates a graph of RPT capacity retention rates according to Examples and Comparative Examples.

## Experimental Example 2: Measurement and evaluation of resistance increase rate

After the capacity retention rates were measured by charging/discharging the secondary batteries at 0.33 C/0.33 C (4.2-3.0 V) every 50 cycles during the test in Experimental Example 1, the resistance increase rates were compared and analyzed by discharging the secondary batteries at 2.5 C pulse in SOC50 to measure the resistance.

FIG. 3 illustrates a graph of RPT resistance increase rates according to the Examples and the Comparative Examples.

Further, for the evaluation of the service life characteristics and the evaluation of the resistance increase rate measurement, data at 200 cycle was each calculated, and the results are shown in the following Table 1.

[Table 1] (Examples 5-8 are according to the present invention; examples 1, 1-1, 2, 3 and 4 are not)

|  | Evaluation of capacity retention rate (%, @200cycle) | Resistance increase rate (%, @200cycle) |
|---|---|---|
| Example 1 | 88.2 | 17.2 |
| Example 1-1 | 85.4 | 17 |
| Example 2 | 87.5 | 17.8 |
| Example 3 | 88 | 17.5 |
| Example 4 | 87.5 | 17.7 |
| Example 5 | 86.8 | 18.4 |
| Example 6 | 87.2 | 18.6 |
| Example 7 | 87.4 | 18.2 |
| Example 8 | 87.5 | 17.8 |
| Comparative Example 1 | 84.1 | 21.8 |
| Comparative Example 2 | 81.2 | 23.2 |
| Comparative Example 3 | 82 | 31 |

(continued)

|  | Evaluation of capacity retention rate (%, @200cycle) | Resistance increase rate (%, @200cycle) |
|---|---|---|
| Comparative Example 4 | 84.9 | 21.7 |
| Comparative Example 4-1 | 83.2 | 28.1 |
| Comparative Example 5 | 85 | 22.2 |

As can be confirmed in Table 1, it could be confirmed that the negative electrodes of Examples 1 to 8 and 1-1 were better in the evaluation of capacity retention rate and resistance increase rate than the negative electrodes of Comparative Examples 1 to 5 and 4-1.

In particular, the negative electrodes of Examples 1 to 8 and 1-1 (of which examples 5-8 are according to the invention, and examples 1-5 and 1-1 are not) have a double layer active material layer having a specific composition and content, and in particular, it was confirmed that the negative electrodes could have advantages favorable for high capacity, high density and quick charging as it is particularly because the first negative electrode active material layer includes a high content of SiOx (x=0), and furthermore, it could be confirmed that the uniformity on the surface of the negative electrode during charging and discharging could be regulated by including one or more selected from the group consisting of a silicon-based active material and a carbon-based active material in the second negative electrode active material layer, thereby improving cycle characteristics.

Further, in Examples 1 and 1-1, the compositions of the negative electrode are the same, but the case where pre-lithiation is performed and the case where pre-lithiation is not performed are compared. Although the case where pre-lithiation is not performed as in Example 1-1 is inferior to Example 1 in terms of capacity retention rate, it could be confirmed that when the composition of the double layer negative electrode according to the present application was satisfied, a capacity retention rate was superior to those of Comparative Examples 1 to 5 and 4-1, and the resistance increase rate was also low. This is because the acceleration of degradation on the surface of the negative electrode can be prevented even though the charging and discharging cycle is performed, and furthermore, it could be confirmed that when pre-lithiation was performed as in Example 1, the capacity retention rate was remarkably high because the above advantage became more apparent.

That is, from the results of Examples 1 to 8 and 1-1, of which examples 5-8 are according to the present invention and examples 1-4 and 1-1 are not, it could be confirmed that a negative electrode with a double layer structure having the specific composition and content of the present invention had excellent capacity retention and resistance characteristics by preventing degradation on the surface during charging and discharging compared to the other negative electrodes (Comparative Examples 1 to 5 and 4-1). Furthermore, when Examples 1 and 1-1 were compared, it could be confirmed that even when pre-lithiation was performed, the negative electrode had a remarkably high capacity retention rate and exhibited an equal level of the resistance increase rate because the negative electrode could prevent a heterogeneous pre-lithiation on the surface by including a second negative electrode active material layer.

In Comparative Example 1, a single-layered active material layer including Si particles was used as a negative electrode active material, and although the initial capacity was excellent, it could be confirmed that the capacity retention rate decreased due to the Si particle cracking phenomenon on the surface of the electrode, and the resistance increase rate was high. From this, it was possible to confirm the role of the second negative electrode active material layer according to the present application, which serves as a buffer layer.

Comparative Example 2 is a negative electrode, in which a single-layered active material layer including Si particles is used as a negative electrode active material and pre-lithiation is not performed. In this case, it could be confirmed that the capacity retention rate and the resistance increase rate due to the cracking of Si particles on the electrode surface during charging and discharging also deteriorated compared to the Examples.

Comparative Example 3 corresponds to a negative electrode in which the order of the first negative electrode active material layer and the second negative electrode active material layer of the present application is changed. In this case, it could be confirmed that the Si particle cracking phenomenon on the electrode surface still occurred, and accordingly, the capacity retention rate decreased, and the resistance increase rate was also high.

Comparative Example 4 is a case where the content of the silicon-based active material included in the second negative electrode active material layer of the present application falls within a range of less than the lower limit value. That is, Comparative Example 4 is a case where the second negative electrode active material layer includes a graphite-based active material more than a silicon-based active material, and in this case, as can be confirmed in Table 1, it could be confirmed that during charging and discharging, the second negative electrode active material layer acted as a resistance layer and thus, the capacity retention rate was inferior to that of Examples 1 to 8, and accordingly, the resistance increase rate was high.

Comparative Example 5 has a single-layered negative electrode active material layer, and is a negative electrode when Si active material and SiO active material are blended. In this case, it could be confirmed that the capacity retention rate decreased, and the resistance increase rate was also high because optimum Si and SiO contents were not satisfied compared to the case where the negative electrode active material layer was provided as two layers as in the present invention.

**Claims**

1. A negative electrode for a lithium secondary battery, comprising:

a negative electrode current collector layer;
a first negative electrode active material layer on one surface or both surfaces of the negative electrode current collector layer; and
a second negative electrode active material layer on a surface opposite to a surface of the first negative electrode active material layer facing the negative electrode current collector layer;
wherein the first negative electrode active material layer comprises a first negative electrode active material layer composition comprising a first negative electrode active material, and the second negative electrode active material layer comprises a second negative electrode active material layer composition comprising a second negative electrode active material, a second negative electrode conductive material, and a second negative electrode binder;
the first negative electrode active material comprises one or more selected from the group consisting of SiOx, wherein x=0, and SiOx, wherein 0<x<2, and comprises 95 parts by weight or more of the SiOx, wherein x=0, based on 100 parts by weight of the first negative electrode active material;
the second negative electrode conductive material comprises at least one selected from the group consisting of a dotted conductive material, a linear conductive material, and a planar conductive material, wherein the dotted conductive material is selected from carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative; and
the second negative electrode active material comprises one or more selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

2. The negative electrode of claim 1, wherein the silicon-based active material comprises one or more selected from the group consisting of SiOx, wherein 0<x<2, SiC, and a Si alloy.

3. The negative electrode of claim 1, wherein the silicon-based active material comprises SiOx, wherein 0<x<2; or SiC.

4. The negative electrode of claim 1, wherein the first negative electrode active material is present in an amount of 60 parts by weight or more based on 100 parts by weight of the first negative electrode active material layer composition.

5. The negative electrode of claim 1, wherein the first negative electrode active material layer has a thickness of 10 $\mu$m or more and 200 $\mu$m or less, and
the second negative electrode active material layer has a thickness of 10 $\mu$m or more and 100 $\mu$m or less.

6. The negative electrode of claim 1, wherein a loading amount (a) of the first negative electrode active material layer composition satisfies 2-fold or more of a loading amount (b) of the second negative electrode active material layer composition.

7. The negative electrode of claim 1, wherein the first negative electrode active material layer composition further comprises at least one selected from the group consisting of a first negative electrode conductive material, and a first negative electrode binder.

8. The negative electrode of claim 1, wherein the carbon-based active material comprises graphite,

the graphite comprises artificial graphite and natural graphite, and
a weight ratio of the artificial graphite and the natural graphite is 5:5 to 9.5:0.5.

9. The negative electrode of claim 1, wherein the second negative electrode conductive material comprises at least the linear conductive material.

10. The negative electrode of claim 1, wherein the first negative electrode active material layer is in contact with an entire surface of the negative electrode current collector layer, and
wherein the second negative electrode active material layer is in contact with an entire surface of the first negative electrode active material layer.

11. A method for preparing a negative electrode for a lithium secondary battery, the method comprising:

providing a negative electrode current collector layer;
forming a first negative electrode active material layer by applying a first negative electrode active material layer composition comprising a first negative electrode active material on one surface or both surfaces of the negative electrode current collector layer; and
forming a second negative electrode active material layer by applying a second negative electrode active material layer composition comprising a second negative electrode active material, a second negative electrode conductive material, and a second negative electrode binder on a surface opposite to a surface of the first negative electrode active material layer facing the negative electrode current collector layer;
wherein the first negative electrode active material comprises at least one selected from the group consisting of SiOx, wherein x=0, and SiOx, wherein 0<x<2, and comprises 95 parts by weight or more of the SiOx, wherein x=0, based on 100 parts by weight of the first negative electrode active material;
the second negative electrode conductive material comprises at least one selected from the group consisting of a dotted conductive material, a linear conductive material, and a planar conductive material, wherein the dotted conductive material is selected from carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative; and
the second negative electrode active material comprises at least one selected from the group consisting of a carbon-based active material, a silicon-based active material, a metal-based active material capable of forming an alloy with lithium and a lithium-based nitride, and the silicon-based active material is present in an amount of 50 parts by weight or more and 100 parts by weight or less based on 100 parts by weight of the second negative electrode active material.

12. The method of claim 11, further comprising:

subjecting a negative electrode in which the first negative electrode active material layer and the second negative electrode active material layer are present on the surface of the negative electrode current collector to pre-lithiation,
wherein the subjecting of the negative electrode to pre-lithiation comprises at least one of: a lithium electroplating process, a lithium metal transfer process, a lithium metal deposition process, or a stabilized lithium metal powder (SLMP) coating process.

13. The method of claim 11, wherein the first negative electrode active material layer is in contact with an entire surface of the negative electrode current collector layer, and
wherein the second negative electrode active material layer is in contact with an entire surface of the first negative electrode active material layer.

14. The method of claim 11, wherein the second negative active material layer is formed on the first negative electrode active material layer by a wet on dry process, wherein the wet on dry process comprises:

applying the first negative electrode active material layer composition,
drying the applied first negative electrode active material layer composition partially or completely, and
applying the second negative electrode active material layer composition to the first negative electrode active material layer.

15. A lithium secondary battery comprising:

a positive electrode;
the negative electrode for a lithium secondary battery according to any one of claims 1 to 10;

a separator provided between the positive electrode and the negative electrode; and
an electrolyte.

**Patentansprüche**

1. Negative Elektrode für eine Lithium-Sekundärbatterie, umfassend:

   eine Negativelektroden-Stromabnahmeschicht;
   eine erste Negativelektroden-Aktivmaterialschicht auf einer Oberfläche oder beiden Oberflächen der Negativelektroden-Stromabnahmeschicht; und
   eine zweite Negativelektroden-Aktivmaterialschicht auf einer Oberfläche gegenüberliegend zu einer Oberfläche der ersten Negativelektroden-Aktivmaterialschicht, die der Negativelektroden-Stromabnahmeschicht zugewandt ist;
   worin die erste Negativelektroden-Aktivmaterialschicht eine erste Negativelektroden-Aktivmaterialschichtzusammensetzung umfasst, die ein erstes Negativelektroden-Aktivmaterial umfasst, und die zweite Negativelektroden-Aktivmaterialschicht eine zweite Negativelektroden-Aktivmaterialschichtzusammensetzung umfasst, die ein zweites Negativelektroden-Aktivmaterial, ein zweites Negativelektroden-leitfähiges Material und ein zweites Negativelektroden-Bindemittel umfasst;
   worin das erste Negativelektroden-Aktivmaterial eines oder mehrere umfasst, ausgewählt aus der Gruppe, bestehend aus SiOx, worin x=0, und SiOx, worin 0<x<2, und 95 Gewichtsteile oder mehr des SiOx umfasst, worin x=0, bezogen auf 100 Gewichtsteile des ersten Negativelektroden-Aktivmaterials;
   das zweite Negativelektroden-leitfähige Material zumindest eines umfasst, das ausgewählt ist aus der Gruppe, bestehend aus einem punktförmigen leitfähigen Material, einem linearen leitfähigen Material und einem planaren leitfähigen Material, worin das punktförmige leitfähige Material ausgewählt ist aus Ruß, Acetylen-Schwarz, Ketjen-Schwarz, Kanalruß, Ofenruß, Lampenruß, thermischem Ruß, einer leitfähigen Faser, Fluorkohlenstoff, einem Aluminiumpulver, einem Nickelpulver, Zinkoxid, Kaliumtitanat, Titanoxid und einem Polyphenylenderivat; und
   das zweite Negativelektroden-Aktivmaterial eines oder mehrere umfasst, ausgewählt aus der Gruppe, bestehend aus einem Aktivmaterial auf Kohlenstoffbasis, einem Aktivmaterial auf Siliciumbasis, einem Aktivmaterial auf Metallbasis, das in der Lage ist, eine Legierung mit Lithium zu bilden, und einem Lithium-basierten Nitrid, und worin das Aktivmaterial auf Siliciumbasis in einer Menge von 50 Gewichtsteile oder mehr und 100 Gewichtsteilen oder weniger vorliegt, bezogen auf 100 Gewichtsteile des zweiten Negativelektroden-Aktivmaterials.

2. Negative Elektrode gemäß Anspruch 1, worin das Aktivmaterial auf Siliciumbasis eines oder mehrere umfasst, ausgewählt aus der Gruppe, bestehend aus SiOx, worin 0<x<2, SiC und einer Si-Legierung.

3. Negative Elektrode gemäß Anspruch 1, worin das Aktivmaterial auf Siliciumbasis SiOx, worin 0<x<2; oder SiC umfasst.

4. Negative Elektrode gemäß Anspruch 1, worin das erste Negativelektroden-Aktivmaterial in einer Menge von 60 Gewichtsteilen oder mehr vorliegt, bezogen auf 100 Gewichtsteile der ersten Negativelektroden-Aktivmaterialschichtzusammensetzung.

5. Negative Elektrode gemäß Anspruch 1, worin die erste Negativelektroden-Aktivmaterialschicht eine Dicke von 10 $\mu$m oder mehr und 200 $\mu$m oder weniger aufweist und die zweite Negativelektroden-Aktivmaterialschicht eine Dicke von 10 $\mu$m oder mehr und 100 $\mu$m oder weniger aufweist.

6. Negative Elektrode gemäß Anspruch 1, worin die Beladungsmenge (a) der ersten Negativelektroden-Aktivmaterialschichtzusammensetzung das 2-fache oder mehr der Beladungsmenge (b) der zweiten Negativelektroden-Aktivmaterialschichtzusammensetzung ausmacht.

7. Negative Elektrode gemäß Anspruch 1, worin die erste Negativelektroden-Aktivmaterialschichtzusammensetzung ferner zumindest eines umfasst, ausgewählt aus der Gruppe, bestehend aus einem ersten Negativelektrodenleitfähigen Material und einem ersten Negativelektroden-Bindemittel.

8. Negative Elektrode gemäß Anspruch 1, worin das Aktivmaterial auf Kohlenstoffbasis Graphit umfasst,

der Graphit künstlichen Graphit und natürlichen Graphit umfasst, und
das Gewichtsverhältnis des künstlichen Graphits zum natürlichen Graphit 5:5 bis 9,5:0,5 beträgt.

9. Negative Elektrode gemäß Anspruch 1, worin das zweite Negativelektroden-leitfähige Material zumindest das lineare leitfähige Material umfasst.

10. Negative Elektrode gemäß Anspruch 1, worin die erste Negativelektroden-Aktivmaterialschicht in Kontakt mit der gesamten Oberfläche der Negativelektroden-Stromabnahmeschicht steht, und
worin die zweite Negativelektroden-Aktivmaterialschicht in Kontakt mit der gesamten Oberfläche der ersten Negativelektroden-Aktivmaterialschicht steht.

11. Verfahren zur Herstellung einer negativen Elektrode für eine Lithium-Sekundärbatterie, wobei das Verfahren umfasst:

Bereitstellen einer Negativelektroden-Stromabnahmeschicht;
Bilden einer ersten Negativelektroden-Aktivmaterialschicht durch Auftragen einer ersten Negativelektroden-Aktivmaterialschichtzusammensetzung, umfassend ein erstes Negativelektroden-Aktivmaterial, auf eine Oberfläche oder beide Oberflächen der Negativelektroden-Stromabnahmeschicht; und
Bilden einer zweiten Negativelektroden-Aktivmaterialschicht durch Auftragen einer zweiten Negativelektroden-Aktivmaterialschichtzusammensetzung, umfassend en zweites Negativelektroden-Aktivmaterial, ein zweites Negativelektroden-leitfähiges Material und ein zweites Negativelektroden-Bindemittel, auf einer Oberfläche gegenüberliegend zu einer Oberfläche der ersten Negativelektroden-Aktivmaterialschicht, die der Negativelektroden-Stromabnahmeschicht zugewandt ist;
worin das erste Negativelektroden-Aktivmaterial zumindest eines umfasst, ausgewählt aus der Gruppe, bestehend aus SiOx, worin x=0, und SiOx, worin 0<x<2, und 95 Gewichtsteile oder mehr des SiOx umfasst, worin x=0, bezogen auf 100 Gewichtsteile des ersten Negativelektroden-Aktivmaterials;
das zweite Negativelektroden-leitfähige Material zumindest eines umfasst, das ausgewählt ist aus der Gruppe, bestehend aus einem punktförmigen leitfähigen Material, einem linearen leitfähigen Material und einem planaren leitfähigen Material, worin das punktförmige leitfähige Material ausgewählt ist aus Ruß, Acetylen-Schwarz, Ketjen-Schwarz, Kanalruß, Ofenruß, Lampenruß, thermischem Ruß, einer leitfähigen Faser, Fluorkohlenstoff, einem Aluminiumpulver, einem Nickelpulver, Zinkoxid, Kaliumtitanat, Titanoxid und einem Polyphenylenderivat; und
das zweite Negativelektroden-Aktivmaterial eines oder mehrere umfasst, ausgewählt aus der Gruppe, bestehend aus einem Aktivmaterial auf Kohlenstoffbasis, einem Aktivmaterial auf Siliciumbasis, einem Aktivmaterial auf Metallbasis, das in der Lage ist, eine Legierung mit Lithium zu bilden, und einem Lithium-basierten Nitrid, und worin das Aktivmaterial auf Siliciumbasis in einer Menge von 50 Gewichtsteile oder mehr und 100 Gewichtsteilen oder weniger vorliegt, bezogen auf 100 Gewichtsteile des zweiten Negativelektroden-Aktivmaterials.

12. Verfahren gemäß Anspruch 11, ferner umfassend:

Unterziehen einer negativen Elektrode, bei der die erste Negativelektroden-Aktivmaterialschicht und die zweite Negativelektroden-Aktivmaterialschicht auf der Oberfläche des Negativelektroden-Stromabnehmers vorliegen, unter eine Prä-Lithiierung,
worin das Unterziehen der negativen Elektrode unter eine Prä-Lithiierung zumindest eines umfasst von: einem Lithium-Elektroplattierprozess, einem Lithiummetall-Übertragungsprozess, einem Lithiummetall-Abscheideprozess oder einem Beschichtungsprozess von stabilisiertem Lithium-Metallpulver (SLMP).

13. Verfahren gemäß Anspruch 11, worin die erste Negativelektroden-Aktivmaterialschicht in Kontakt mit einer gesamten Oberfläche der Negativelektroden-Stromabnahmeschicht steht, und
worin die zweite Negativelektroden-Aktivmaterialschicht in Kontakt mit der gesamten Oberfläche der ersten Negativelektroden-Aktivmaterialschicht steht.

14. Verfahren gemäß Anspruch 11, worin die zweite Negativ-Aktivmaterial auf der ersten Negativelektroden-Aktivmaterial durch einen Nass-auf-Trocken-Prozess gebildet wird, worin der Nass-auf-Trocken-Prozess umfasst:

Auftragen der ersten Negativelektroden-Aktivmaterialschichtzusammensetzung,
teilweises oder vollständiges Trocknen der ersten Negativelektroden-Aktivmaterialschichtzusammensetzung, und

Auftragen der zweiten Negativelektroden-Aktivmaterialschichtzusammensetzung auf die erste Negativelektroden-Aktivmaterialschicht.

**15.** Lithium-Sekundärbatterie, umfassend:

eine positive Elektrode ;
die negative Elektrode für eine Lithium-Sekundärbatterie gemäß irgendeinem der Ansprüche 1 bis 10;
einen zwischen der positiven Elektrode und der negativen Elektrode vorgesehenen Separator; und
einen Elektrolyten.

**Revendications**

**1.** Électrode négative pour une batterie secondaire au lithium, comprenant :

une couche de collecteur de courant d'électrode négative ;
une première couche de matériau actif d'électrode négative formée sur une surface ou les deux surfaces de la couche de collecteur de courant d'électrode négative ; et
une seconde couche de matériau actif d'électrode négative sur une surface opposée à une surface de la première couche de matériau actif d'électrode négative faisant face à la couche de collecteur de courant d'électrode négative ;
dans laquelle la première couche de matériau actif d'électrode négative comprend une première composition de couche de matériau actif d'électrode négative comprenant un premier matériau actif d'électrode négative, et la seconde couche de matériau actif d'électrode négative comprend une seconde composition de couche de matériau actif d'électrode négative comprenant un second matériau actif d'électrode négative, un second matériau conducteur d'électrode négative, et un second liant d'électrode négative ;
le premier matériau actif d'électrode négative comprend un ou plusieurs sélectionnés dans le groupe consistant en SiOx, dans lequel x=0, et en SiOx, dans lequel 0<x<2, et comprend 95 parts en poids ou plus du SiOx, dans lequel x=0, sur la base de 100 parts en poids du premier matériau actif d'électrode négative ;
le second matériau conducteur d'électrode négative comprend au moins un sélectionné dans le groupe consistant en un matériau conducteur parsemé, un matériau conducteur linéaire et un matériau conducteur planaire, dans laquelle le matériau conducteur parsemé est sélectionné parmi le noir de carbone, le noir d'acétylène, le noir de Ketjen, le noir de tunnel, le noir de fourneau, le noir de fumée, le noir thermique, une fibre conductrice, du fluorocarbone, une poudre d'aluminium, une poudre de nickel, l'oxyde de zinc, le titanate de potassium, l'oxyde de titane et un dérivé de polyphénylène ; et
le second matériau actif d'électrode négative comprend un ou plusieurs sélectionnés dans le groupe consistant en un matériau actif à base de carbone, un matériau actif à base de silicium, un matériau actif à base de métal apte à former un alliage avec le lithium et un nitrure à base de lithium, et le matériau actif à base de silicium est présent en une quantité de 50 parts en poids ou plus et 100 parts en poids ou moins sur la base de 100 parts en poids du second matériau actif d'électrode négative.

**2.** Électrode négative de la revendication 1, dans laquelle le matériau actif à base de silicium comprend un ou plusieurs sélectionnés dans le groupe consistant en SiOx, dans lequel 0<x<2, en SiC, et en un alliage de Si.

**3.** Électrode négative de la revendication 1, dans laquelle le matériau actif à base de silicium comprend du SiOx, dans lequel 0<x<2 ; ou du SiC.

**4.** Électrode négative selon la revendication 1, dans laquelle le premier matériau actif d'électrode négative est présent en une quantité de 60 parts en poids ou plus sur la base de 100 parts en poids de la première composition de couche de matériau actif d'électrode négative.

**5.** Électrode négative selon la revendication 1, dans laquelle la première couche de matériau actif d'électrode négative présente une épaisseur de 10 μm ou plus et de 200 μm ou moins, et
la seconde couche de matériau actif d'électrode négative présente une épaisseur de 10 μm ou plus et de 100 μm ou moins.

**6.** Électrode négative de la revendication 1, dans laquelle une quantité de chargement (a) de la première composition de couche de matériau actif d'électrode négative satisfait 2 fois ou plus d'une quantité de chargement (b) de la seconde composition de couche de matériau actif d'électrode négative.

7. Électrode négative de la revendication 1, dans laquelle la première composition de couche de matériau actif d'électrode négative comprend en outre au moins un sélectionné dans le groupe consistant en un premier matériau conducteur d'électrode négative, et un premier liant d'électrode négative.

8. Électrode négative de la revendication 1, dans laquelle le matériau actif à base de carbone comprend du graphite,

   le graphite comprend du graphite artificiel et du graphite naturel, et
   un rapport en poids du graphite artificiel et du graphite naturel est de 5:5 à 9,5:0,5.

9. Électrode négative de la revendication 1, dans laquelle le second matériau conducteur d'électrode négative comprend au moins le matériau conducteur linéaire.

10. Électrode négative de la revendication 1, dans laquelle la première couche de matériau actif d'électrode négative est en contact avec une surface entière de la couche de collecteur de courant d'électrode négative, et
   dans laquelle la seconde couche de matériau actif d'électrode négative est en contact avec une surface entière de la première couche de matériau actif d'électrode négative.

11. Procédé de préparation d'une électrode négative pour une batterie secondaire au lithium, le procédé comprenant :

   la fourniture d'une couche de collecteur de courant d'électrode négative ;
   la formation d'une première couche de matériau actif d'électrode négative en appliquant une première composition de couche de matériau actif d'électrode négative comprenant un premier matériau actif d'électrode négative sur une surface ou les deux surfaces de la couche de collecteur de courant d'électrode négative ; et
   la formation d'une seconde couche de matériau actif d'électrode négative en appliquant une seconde composition de couche de matériau actif d'électrode négative comprenant un second matériau actif d'électrode négative, un second matériau conducteur d'électrode négative et un second liant d'électrode négative sur une surface opposée à une surface de la première couche de matériau actif d'électrode négative faisant face à la couche de collecteur de courant d'électrode négative ;
   dans lequel le premier matériau actif d'électrode négative comprend au moins sélectionné dans le groupe consistant en SiOx, dans lequel x=0, et en SiOx, dans lequel 0<x<2, et comprend 95 parts en poids ou plus du SiOx, dans lequel x=0, sur la base de 100 parts en poids du premier matériau actif d'électrode négative ;
   le second matériau conducteur d'électrode négative comprend au moins un sélectionné dans le groupe consistant en un matériau conducteur parsemé, un matériau conducteur linéaire et un matériau conducteur planaire, dans laquelle le matériau conducteur parsemé est sélectionné parmi le noir de carbone, le noir d'acétylène, le noir de Ketjen, le noir de tunnel, le noir de fourneau, le noir de fumée, le noir thermique, une fibre conductrice, du fluorocarbone, une poudre d'aluminium, une poudre de nickel, l'oxyde de zinc, le titanate de potassium, l'oxyde de titane et un dérivé de polyphénylène ; et
   le second matériau actif d'électrode négative comprend au moins un sélectionné dans le groupe consistant en un matériau actif à base de carbone, un matériau actif à base de silicium, un matériau actif à base de métal apte à former un alliage avec le lithium et un nitrure à base de lithium, et le matériau actif à base de silicium est présent en une quantité de 50 parts en poids ou plus et 100 parts en poids ou moins sur la base de 100 parts en poids du second matériau actif d'électrode négative.

12. Procédé selon la revendication 11, comprenant en outre :

   le fait de soumettre à une pré-lithiation une électrode négative dans laquelle la première couche de matériau actif d'électrode négative et la seconde couche de matériau actif d'électrode négative sont présentes sur la surface du collecteur de courant d'électrode négative,
   dans lequel le fait de soumettre à une pré-lithiation l'électrode négative comprend au moins l'un parmi : un processus d'électroplacage de lithium, un processus de transfert métallique de lithium, un processus de dépôt métallique de lithium ou un processus de revêtement de poudre métallique de lithium stabilisée (SLMP).

13. Procédé selon la revendication 11, dans lequel la première couche de matériau actif d'électrode négative est en contact avec une surface entière de la couche de collecteur de courant d'électrode négative,
   et

dans lequel la seconde couche de matériau actif d'électrode négative est en contact avec une surface entière de la première couche de matériau actif d'électrode négative.

14. Procédé selon la revendication 11, dans lequel la seconde couche de matériau actif d'électrode négative est formée sur la première couche de matériau actif d'électrode négative par un processus humide sur sec, dans lequel le processus humide sur sec comprend :

l'application de la première composition de couche de matériau actif d'électrode négative,
le séchage de la première composition de couche de matériau actif d'électrode négative appliquée partiellement ou complètement, et
l'application de la seconde composition de couche de matériau actif d'électrode négative à la première couche de matériau actif d'électrode négative.

15. Batterie secondaire au lithium comprenant :

une électrode positive ;
l'électrode négative pour une batterie secondaire au lithium selon l'une quelconque des revendications 1 à 10 ;
un séparateur disposé entre l'électrode positive et l'électrode négative ; et
un électrolyte.

[Figure 1]

[Figure 2]

[Figure 3]

[Figure 4]

[Figure 5]

| Prepare first anode slurry mixture (active material/conductive agent/binder/solvent) |
| :---: |

↓

| Apply first anode slurry mixture to collector |
| :---: |

↓

| Drying the first anode slurry mixture to form the first layer |
| :---: |

↓

| Prepare second anode slurry mixture |
| :---: |

↓

| Apply the second anode slurry mixture on the first layer |
| :---: |

↓

| Drying the second anode slurry mixture to form the second layer |
| :---: |

↓

| Roll and press the negative electrode |
| :---: |

↓

| Slitting the negative electrode 2 times using single coating die |
| :---: |

[Figure 6]

```
┌─────────────────────────────────────────────────────────────┐
│  Prepare first anode slurry mixture (active material/conductive │
│                   agent/binder/solvent)                        │
└─────────────────────────────────────────────────────────────┘
                              ↓
┌─────────────────────────────────────────────────────────────┐
│    Apply first anode slurry mixture to collector as the first layer │
└─────────────────────────────────────────────────────────────┘
                              ↓
┌─────────────────────────────────────────────────────────────┐
│              Prepare second anode slurry mixture               │
└─────────────────────────────────────────────────────────────┘
                              ↓
┌─────────────────────────────────────────────────────────────┐
│       Apply the second anode slurry mixture on the first layer │
└─────────────────────────────────────────────────────────────┘
                              ↓
┌─────────────────────────────────────────────────────────────┐
│   Drying the second anode slurry mixture to form the second layer │
└─────────────────────────────────────────────────────────────┘
                              ↓
┌─────────────────────────────────────────────────────────────┐
│             Roll and press the negative electrode              │
└─────────────────────────────────────────────────────────────┘
                              ↓
┌─────────────────────────────────────────────────────────────┐
│   Slitting the negative electrode 2 times using single coating die │
└─────────────────────────────────────────────────────────────┘
```

[Figure 7]

[Figure 8]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210090580
- KR 1020210189600
- JP 2009080971 A
- US 2018062158 A1
- US 2020335769 A1